(19) Europäisches Patentamt
European Patent Office
Office européen des brevets

(11) EP 2 876 799 A1

(12) **EUROPEAN PATENT APPLICATION**

(43) Date of publication:
**27.05.2015 Bulletin 2015/22**

(21) Application number: **14192793.9**

(22) Date of filing: **12.11.2014**

(51) Int Cl.:
***H02M 5/297*** *(2006.01)*
*H02M 1/38* *(2007.01)*
*H02M 5/293* *(2006.01)*
*H02M 1/00* *(2007.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.11.2013 JP 2013236070**

(71) Applicant: **Kabushiki Kaisha Yaskawa Denki**
**Kitakyushu-shi, Fukuoka 806-0004 (JP)**

(72) Inventors:
- **Yamazaki, Akira**
  **Kitakyushu-shi, Fukuoka 806-0004 (JP)**
- **Ebisu, Joji**
  **Kitakyushu-shi, Fukuoka 806-0004 (JP)**

(74) Representative: **Viering, Jentschura & Partner**
**Patent- und Rechtsanwälte**
**Grillparzerstrasse 14**
**81675 München (DE)**

(54) **Matrix converter and method for compensating for output voltage error**

(57) A matrix converter (1) includes a power converter (10), a control information generator (22), a commutation controller (23), a storage (20), and an error compensator (24). The power converter (10) includes bidirectional switches (Sru,Ssu,Stu,Srv,Ssv,Stv,Srw,Ssw,Stw,Sw) each having a conducting direction controllable by switching elements (Swa,Swb). The bidirectional switches (Sru,Ssu,Stu,Srv,Ssv,Stv,Srw,Ssw,Stw,Sw) are disposed between input terminals (Tr,Ts,Tt) and output terminals (Tu,Tv,Tw). The input terminals (Tr,Ts,Tt) are respectively coupled to phases of an AC power source (2). The output terminals (Tu,Tv,Tw) are respectively coupled to phases of a load (3). The control information generator (22) generates control information to control the bidirectional switches (Sru,Ssu,Stu,Srv,Ssv,Stv,Srw,Ssw,Stw,Sw). The commutation controller (23) controls each of the switching elements (Swa,Swb) based on the control information so as to perform commutation control. The storage (20) stores setting information of at least one of a method of the commutation control and a modulation method of power conversion. The error compensator (24) compensates for an output voltage error based on the setting information.

**FIG. 1**

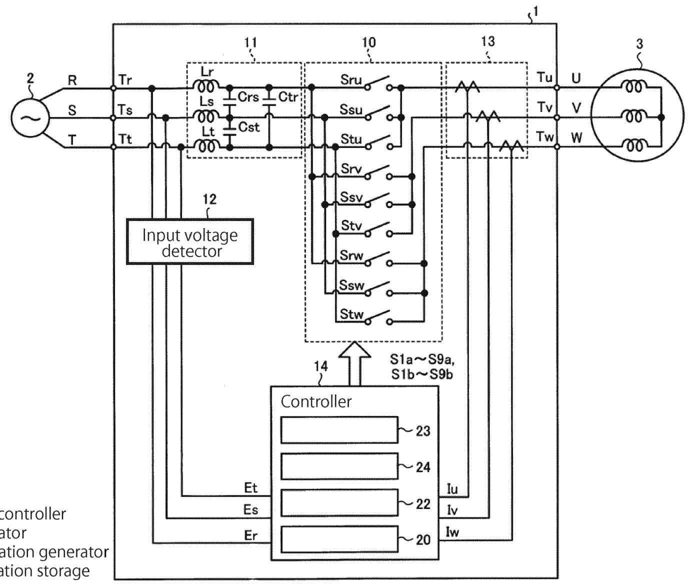


23: Commutation controller
24: Error compensator
22: Control information generator
20: Setting information storage

EP 2 876 799 A1

Printed by Jouve, 75001 PARIS (FR)

**Description**

BACKGROUND

FIELD OF THE INVENTION

The present invention relates to a matrix converter and a method for compensating for an output voltage error.

DISCUSSION OF THE BACKGROUND

Matrix converters each include a plurality of bidirectional switches. The bidirectional switches couple the phases of an AC (Alternating Current) power supply to respective phases of a load. Each matrix converter controls the bidirectional switches to directly switch between the voltages for the phases of the AC power supply so as to output a desired voltage and a desired frequency to the load.

The bidirectional switches each include a plurality of switching elements. When the matrix converter uses the bidirectional switches to switch between the phases of the AC power supply to couple to the load, the matrix converter performs commutation control. In the commutation control, the matrix converter individually turns on or off each of the switching elements in a predetermined order. Although the commutation control prevents inter-line short-circuiting of the AC power supply and prevents opening of the output of the matrix converter, errors may occur in the output voltage.

In view of this, Japanese Unexamined Patent Application Publication Nos. 2004-7929 and 2007-82286 disclose correcting a voltage command based on the inter-line voltage of the AC power supply so as to compensate for output voltage error.

The contents of Japanese Unexamined Patent Application Publication Nos. 2004-7929 and 2007-82286 are incorporated herein by reference in their entirety.

The conventional technique to compensate for output voltage error is intended for a single commutation method or a single modulation method. That is, the conventional technique is unable to switching between the types of the commutation method or the types of the modulation method.

One aspect of an embodiment has been made in view of the above-described circumstances, and it is an object of the present disclosure to provide a matrix converter and a method for compensating for an output voltage error that ensure accuracy in preventing output voltage error caused by commutation control even when the type of the commutation method or the type of the modulation method is switched to another type.

SUMMARY

According to one aspect of the present disclosure, a matrix converter includes a power converter, a control information generator, a commutation controller, a storage, and an error compensator. The power converter includes a plurality of bidirectional switches each having a conducting direction controllable by a plurality of switching elements. The plurality of bidirectional switches are disposed between a plurality of input terminals and a plurality of output terminals. The plurality of input terminals are respectively coupled to phases of an AC power source. The plurality of output terminals are respectively coupled to phases of a load. The control information generator is configured to generate control information to control the plurality of bidirectional switches. The commutation controller is configured to control each of the plurality of switching elements based on the control information so as to perform commutation control. The storage is configured to store setting information of at least one of a method of the commutation control and a modulation method of power conversion. The error compensator is configured to compensate for an output voltage error based on the setting information.

The one aspect of the embodiment provides a matrix converter and a method for compensating an output voltage error that ensure accuracy in preventing output voltage error caused by commutation control even when the type of the commutation method or the type of the modulation method is switched to another type.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 illustrates an exemplary configuration of a matrix converter according to an embodiment;
FIG. 2 illustrates an exemplary configuration of a bidirectional switch illustrated in FIG. 1;
FIG. 3 illustrates a first exemplary configuration of a controller illustrated in FIG. 1;

FIG. 4 illustrates an on-off transition of a switching element in a 4-step current commutation method at *Io* > 0;
FIG. 5 illustrates a relationship between a PWM control command, an output phase voltage, and a carrier wave in the 4-step current commutation method at *Io* > 0;
FIG. 6 illustrates an on-off transition of the switching element in the 4-step current commutation method at *Io* < 0;
FIG. 7 illustrates a relationship between a PWM control command, an output phase voltage, and a carrier wave in the 4-step current commutation method at *Io* < 0;
FIG. 8 illustrates an on-off transition of the switching element in the 4-step voltage commutation method at *Io* > 0;
FIG. 9 illustrates an on-off transition of the switching element in the 4-step voltage commutation method at *Io* < 0;
FIG. 10 illustrates exemplary output voltage space vectors;
FIG. 11 illustrates an exemplary relationship between an output voltage command and space vectors;
FIG. 12 illustrates an exemplary switching pattern (pattern 1) at *Ebase = Ep*;
FIG. 13 illustrates an exemplary switching pattern (pattern 2) at *Ebase = Ep*;
FIG. 14 illustrates an exemplary switching pattern (pattern 1) at *Ebase = En;*
FIG. 15 illustrates an exemplary switching pattern (pattern 2) at *Ebase = En;*
FIG. 16 illustrates an exemplary relationship between a carrier wave and an output phase voltage in a three-phase modulation method;
FIG. 17 is a flowchart of an example of compensation amount calculation processing performed by a compensation amount calculator;
FIG. 18 illustrates an exemplary relationship between a carrier wave and a correction amount calculation cycle; and
FIG. 19 illustrates a second exemplary configuration of the controller illustrated in FIG. 1.

DESCRIPTION OF THE EMBODIMENTS

A matrix converter according to an embodiment will be described in detail below by referring to the accompanying drawings. The following embodiment is provided for exemplary purposes only and is not intended in a limiting sense.

[1. Configuration of matrix converter]

FIG. 1 illustrates an exemplary configuration of a matrix converter according to an embodiment. As illustrated in FIG. 1, the matrix converter 1 according to this embodiment is disposed between a three-phase AC power supply 2 (hereinafter simply referred to as an AC power supply 2) and a load 3. Examples of the load 3 include, but are not limited to, an AC motor and an electric generator. The AC power supply 2 includes an *R* phase, an *S* phase, and a *T* phase. The load 3 includes a *U* phase, a *V* phase, and a *W* phase. In the following description, the *R* phase, the *S* phase, and the *T* phase will be referred to as input phases, while the *U* phase, the *V* phase, and the *W* phase will be referred to as output phases.

The matrix converter 1 includes input terminals Tr, Ts, and Tt, output terminals Tu, Tv, and Tw, a power converter 10, an LC filter 11, an input voltage detector 12, an output current detector 13, and a controller 14. When the AC power supply 2 supplies three-phase AC power to the matrix converter 1 through the input terminals Tr, Ts, and Tt, the matrix converter 1 converts the three-phase AC power into three-phase AC power having a desired voltage and a desired frequency. The matrix converter 1 outputs the converted three-phase AC power to the load 3 through the output terminals Tu, Tv, and Tw.

The power converter 10 includes a plurality of bidirectional switches Sru, Ssu, Stu, Srv, Ssv, Stv, Srw, Ssw, and Stw (hereinafter occasionally collectively referred to as bidirectional switch Sw). The bidirectional switch Sw couples each phase of the AC power supply 2 to a corresponding to phase of the load 3.

The bidirectional switches Sru, Ssu, and Stu respectively couple the *R* phase, the *S* phase, and the *T* phase of the AC power supply 2 to the *U* phase of the load 3. The bidirectional switches Srv, Ssv, and Stv respectively couple the *R* phase, the S phase, and the *T* phase of the AC power supply 2 to the V phase of the load 3. The bidirectional switches Srw, Ssw, and Stw respectively couple the *R* phase, the S phase, and the *T* phase of the AC power supply 2 to the W phase of the load 3.

FIG. 2 illustrates an exemplary configuration of the bidirectional switch Sw. As illustrated in FIG. 2, the bidirectional switch Sw includes two series connection circuits. One series connection circuit includes a switching element Swa and a diode Da. The other series connection circuit includes a switching element Swb and a diode Db. These series connection circuits are anti-parallelly coupled to each other. In FIG. 2, input phase voltage is denoted as *Vi* and output phase voltage is denoted as *Vo.*

It is noted that the bidirectional switch Sw will not be limited to the configuration illustrated in FIG. 2 insofar as the bidirectional switch Sw includes a plurality of switching elements to control the conduction direction. While in FIG. 2 the cathode of the diode Da and the cathode of the diode Db are coupled to each other, another possible example is that the cathode of the diode Da and the cathode of the diode Db are not coupled to each other.

Examples of the switching elements Swa and Swb include, but are not limited to, semiconductor switching elements such as metal-oxide-semiconductor field-effect transistor (MOSFET) and insulated gate bipolar transistor (IGBT). Other examples include next generation semiconductor switching elements such as SiC and GaN. When the switching elements Swa and Swb are reverse blocking IGBTs, no diode Da or Db are necessary.

Referring back to FIG. 1, the matrix converter 1 will be further described. The LC filter 11 is disposed between the *R* phase, the S phase, and the *T* phase of the AC power supply 2 and the power converter 10. The LC filter 11 includes three reactors Lr, Ls, and Lt, and three capacitors Crs, Cst, and Ctr to remove high-frequency components caused by switching of the bidirectional switch SW.

The input voltage detector 12 detects the phase voltage of each of the *R* phase, the *S* phase, and the *T* phase of the AC power supply 2. Specifically, the input voltage detector 12 detects instantaneous values *Er, Es,* and *Et* (hereinafter respectively referred to as input phase voltages *Er, Es*, and *Et*) of the phase voltages of the *R* phase, the S phase, and the *T* phase of the AC power supply 2.

The output current detector 13 detects the current between the power converter 10 and the load 3. Specifically, the output current detector 13 detects instantaneous values *Iu*, *Iv*, and *Iw* (hereinafter respectively referred to as output phase currents *Iu*, *Iv,* and *Iw*) of the current between the power converter 10 and the U phase, the V phase, and the W phase of the load 3. In the following description, the output phase currents *Iu*, *Iv,* and *Iw* may occasionally collectively be referred to as output phase current *Io.*

The controller 14 includes a setting information storage 20, a control information generator 22, a commutation controller 23, and an error compensator 24. The control information generator 22, the commutation controller 23, and the error compensator 24 acquire setting information stored in the setting information storage 20 to operate based on the acquired setting information.

The setting information storage 20 stores setting information such as modulation method parameters *Pm,* commutation method setting parameters *Pt,* and carrier frequency setting parameters *Pf.* An example of the setting information is input by a user or a person in charge of installation through an input device (not illustrated) of the matrix converter 1. Each modulation method parameter *Pm* represents a modulation method of the load 3. Each commutation method setting parameter *Pt* specifies a method of commutation control performed by the commutation controller 23. Each carrier frequency setting parameter *Pf* specifies, for example, the frequency of the carrier wave of the control information generator 22.

In order to control the bidirectional switch Sw, the control information generator 22 generates control information in accordance with the input phase voltages *Er, Es*, and *Et,* the output phase currents *Iu*, *Iv,* and *Iw*, the modulation method parameter *Pm,* and the carrier frequency setting parameter *Pf.* Specifically, the control information generator 22 generates the control information at intervals corresponding to the frequency of the carrier wave specified by the carrier frequency setting parameter *Pf.* When *Pm* = 0, for example, the control information generator 22 generates control information in the two-modulation method, while when *Pm* = 1, the control information generator 22 generates control information in the three-modulation method.

When the input phase voltages *Er, Es*, and *Et* are regarded as the input phase voltage *Ep, Em,* and *En* in descending order of magnitude, the two-phase modulation method is a method by which the input phase voltage at one output phase among the *U* phase, the *V* phase, and the *W* phase is fixed to *Ep* or *En,* and the input phase voltages at the remaining two output phases are switched between *Ep, Em,* and *En.* Then, the input phase voltages at the remaining two output phases are output. The three-phase modulation method is a method by which the input phase voltages at all the output phases *U* phase, *V* phase, and *W* phase are switched between *Ep, Em,* and *En.* Thus, the modulation method varies depending on the number of output phases to which the power converter 10 outputs the voltage subjected to PWM modulation.

The commutation controller 23 generates drive signals *S1a* to *S9a,* and *S1b* to *S9b* (hereinafter occasionally collectively referred to as drive signal *Sg*) in accordance with the control information generated by the control information generator 22. The drive signals *S1a* to *S9a,* and *S1b* to *S9b* are for the purpose of performing commutation control in the commutation method corresponding to the commutation method setting parameter *Pt.*

The drive signals *S1a* to *S9a* are input into the gate of the switching element Swa, which is a part of each of the bidirectional switches Sru, Ssu, Stu, Srv, Ssv, Stv, Srw, Ssw, and Stw. The drive signals *S1b* to *S9b* are input into the gate of the switching element Swb, which is another part of each of the bidirectional switch Sru, Ssu, Stu, Srv, Ssv, Stv, Srw, Ssw, and Stw.

When *Pt* = 0, for example, the commutation controller 23 selects the current commutation method to perform commutation control, while when *Pt* = 1, the commutation controller 23 selects the voltage commutation method to perform commutation control. In switching the phases of the load 3 coupled to respective output phases at the bidirectional switch Sw, the commutation control individually turns on or off the switching elements Swa and Swb, which are the switching source and the switching destination of the bidirectional switches Sw. Thus, the commutation control prevents short-circuiting between the input phases and prevents opening of the output phases.

Based on the setting information stored in the setting information storage 20, the error compensator 24 calculates a compensation amount that corresponds to the setting information such as the commutation method, the modulation method, and the carrier wave. Then, the error compensator 24 performs error compensation of the output voltage based on the compensation amount.

In a first embodiment of the error compensation, based on the compensation amount corresponding to the setting information such as the commutation method, the modulation method, and the carrier wave, the error compensator 24 corrects the control information generated by the control information generator 22. Then, the error compensator 24 outputs the corrected control information to the commutation controller 23. In a second embodiment of the error compensation, the error compensator 24 corrects the output voltage command based on the compensation amount corresponding to the setting information such as the commutation method, the modulation method, and the carrier wave, and outputs the output voltage command to the control information generator 22.

Thus, the matrix converter 1 according to the embodiments calculates the compensation amount corresponding to the setting information, and compensates for output voltage error based on the compensation amount. Thus, the matrix converter 1 ensures accuracy in preventing the output voltage error even when the setting information of the type of the commutation method or the type of the modulation method is switched. The first embodiment of the error compensation will be described in detail by referring to a first exemplary configuration of the controller 14. Then, the second embodiment of the error compensation will be described in detail by referring to a second exemplary configuration of the controller 14. It is noted that the setting information may be one parameter or two parameters among the modulation method parameter *Pm,* the commutation method setting parameter *Pt,* and the carrier frequency setting parameter *Pf.*

[2. First exemplary configuration of the controller 14]

FIG. 3 illustrates a first exemplary configuration of the controller 14. As illustrated in FIG. 3, the controller 14 includes the setting information storage 20, the voltage command generator 21, the control information generator 22, the commutation controller 23, and the error compensator 24. The error compensator 24 includes a compensation amount calculator 31 and a pulse width adjustor 32.

The controller 14 includes a microcomputer and various circuits. The microcomputer includes a central processing unit (CPU), a read only memory (ROM), a random access memory (RAM), and an input-output port. The CPU of the microcomputer reads and executes a program stored in the ROM to function as the voltage command generator 21, the control information generator 22, the commutation controller 23, and the error compensator 24. When the CPU executes the program, the RAM performs a function as the setting information storage 20. It is possible to implement the controller 14 using hardware alone, without using any programs.

The setting information storage 20 stores, for example, a modulation method parameter *Pm,* a carrier frequency setting parameter *Pf,* commutation time parameters *Td1* to *Td3,* and a commutation method setting parameter *Pt.* These pieces of information are input into the setting information storage 20 by a user or a person in charge of installation through, for example, the input device (not illustrated) of the matrix converter 1.

The voltage command generator 21 generates and outputs output voltage commands $Vu^*$, $Vv^*$, and $Vw^*$ of respective output phases (hereinafter occasionally referred to as output voltage command $Vo^*$) at predetermined control intervals based on, for example, a frequency command $f^*$ and the output phase currents *Iu*, *Iv*, and *Iw*. The frequency command $f^*$ is a command indicating frequencies of the output phase voltages *Vu, Vv,* and *Vw*.

The control information generator 22 uses a space vector method in every half-cycle of the carrier wave *Sc* to calculate ratios of output vectors based on the input phase voltages *Er, Es,* and *Et,* the output phase currents *Iu*, *Iv,* and *Iw*, and the output voltage commands $Vu^*$, $Vv^*$, and $Vw^*$. The ratios of output vectors each specify a pulse width for the PWM (Pulse Width Modulation) control. The control information generator 22 notifies the error compensator 24 of the calculated ratios of the output vectors as control information *Tru, Trv,* and *Trw*.

The output voltage command $Vo^*$ is used to calculate the control information *Tru, Trv,* and *Trw*. The control information generator 22 switches the output voltage command $Vo^*$ at the time corresponding to a top or valley of the carrier wave *Sc.* Assume that the cycle, *Tsc,* of the carrier wave *Sc* is twice the cycle of the output voltage command $Vo^*$. In this case, the control information generator 22 switches the output voltage command $Vo^*$, which is used to calculate the control information *Tru, Trv,* and *Trw*, in every two cycles of the carrier wave *Sc* at the time corresponding to the top or valley of the carrier wave *Sc.*

The error compensator 24 generates PWM control commands $Vu1^*$, $Vv1^*$, and $Vw1^*$ that have been subjected to output voltage error compensation in accordance with the control information *Tru, Trv,* and *Trw,* the setting information stored in the setting information storage 20, and the output phase currents *Iu*, *Iv,* and *Iw*.

The output voltage error compensation is processing to compensate for a deviation between the ratio of the output vector calculated by the control information generator 22 and the ratio of the output vector set in the commutation control by the commutation controller 23. The error compensator 24 outputs the generated PWM control commands $Vu1^*$, $Vv1^*$, and $Vw1^*$ (hereinafter occasionally referred to as PWM control command $Vo1^*$) to the commutation controller 23. The PWM control command $Vo1^*$ includes information specifying the input phase voltage *Vi* (such information will be hereinafter referred to as specifying input phase information) to be output to the output phase.

When the specifying input phase information of the PWM control command $Vo1^*$ is changed, the commutation controller 23 performs commutation control to switch the phase of the AC power supply 2 coupled to the load 3 at the bidirectional switch Sw, and generates a drive signal *Sg.*

As described above, the error compensator 24 performs the output voltage error compensation in accordance with the type of the commutation method or the type of the modulation method of power conversion. The commutation method, the modulation method, and the error compensation will be described in detail below.

[2.1. Commutation control method]

As described above, examples of the method of commutation performed by the commutation controller 23 include, but are not limited to, a current commutation method and a voltage commutation method. The commutation controller 23 selects the current commutation method or the voltage commutation method in accordance with the commutation method setting parameter *Pt*, which is stored in the setting information storage 20. By the selected commutation method, the commutation controller 23 performs the commutation control.

[2.1.1. Current commutation method]

The current commutation method is a method of commutation performed on an individual output phase basis in accordance with a commutation pattern corresponding to the polarity of the output phase current *Io*. Here, a 4-step current commutation method will be described as an example of the current commutation method performed by the commutation controller 23.

In order to prevent short-circuiting between the input phases and prevent opening of the output phases, the commutation control using the 4-step current commutation method is based on a commutation pattern of the following steps 1 to 4 in accordance with the polarity of the output phase current *Io*.

Step 1: Turn OFF one switching element, among the switching elements of the bidirectional switch Sw serving as the switching source, that has a polarity opposite to the polarity of the output phase current *Io* in terms of the conduction direction.

Step 2: Turn ON one switching element, among the switching elements of the bidirectional switch Sw serving as the switching destination, that has the same polarity as the polarity of the output phase current *Io* in terms of the conduction direction.

Step 3: Turn OFF one switching element, among the switching elements of the bidirectional switch Sw serving as the switching source, that has the same polarity as the polarity of the output phase current *Io* in terms of the conduction direction.

Step 4: Turn OFF one switching element, among the switching elements of the bidirectional switch Sw serving as the switching destination, that has a polarity opposite to the polarity of the output phase current *Io* in terms of the conduction direction.

FIG. 4 illustrates an on-off transition of a switching element in the 4-step current commutation method at $Io > 0$. Switching elements Sw1p and Sw1n respectively denote switching elements Swa and Swb of the bidirectional switch Sw serving as the switching source. Switching element Sw2p and Sw2n respectively denote switching elements Swa and Swb of the bidirectional switch Sw serving as the switching destination. Reference signs *v1* and *v*2 each denote input phase voltage *Vi* and have the relationship $v1 > v2$.

The PWM control command $Vo1^*$ specifies the input phase voltage *Vi* at $Io > 0$. When the input phase voltage *Vi* is switched from *v1* to *v*2, the output phase voltage *Vo* is switched at the timing when step 3 is performed (timing *t3*) as illustrated in FIG. 4. When the input phase voltage *Vi* at $Io > 0$ is switched from *v*2 to *v1* as specified in the PWM control command $Vo1^*$, the output phase voltage *Vo* is switched at the timing when step 2 is performed (timing *t*2).

FIG. 5 illustrates a relationship between the PWM control command $Vo1^*$, the output phase voltage *Vo*, and the carrier wave *Sc* in the 4-step current commutation method at $Io > 0$. As illustrated in FIG. 5, the output phase voltage *Vo* is not switched at the timing when the input phase voltage *Vi* is switched as specified in the PWM control command $Vo1^*$.

Specifically, the output phase voltage *Vo* is switched at the timings when step 3 is performed after timings *ta1* and *ta2*, and at the timings when step 2 is performed after timings *ta3* and timing *ta4*. Thus, an error of $(Ep - En) \times Td2/Tsc$ occurs in the output phase voltage *Vo* with respect to the PWM control command $Vo1^*$ in one cycle *Tsc* of the carrier wave *Sc.*

At $Io < 0$, the timing when the input phase voltage *Vi* output to the output phase is switched is different from the timing at $Io > 0$. FIG. 6 illustrates an on-off transition of the switching element in the 4-step current commutation method at $Io < 0$.

When the input phase voltage *Vi* at *Io* < 0 is switched from *v1* to v2 as specified in the PWM control command *Vo1**, the output phase voltage *Vo* is switched at the timing when step 2 is performed (timing *t2*) as illustrated in FIG. 6. When the input phase voltage *Vi* at *Io* < 0 is switched from v2 to *v1* as specified in the PWM control command *Vo1**, the output phase voltage *Vo* is switched at the timing when step 3 is performed (timing *t3*).

FIG. 7 illustrates a relationship between the PWM control command *Vo1**, the output phase voltage *Vo*, and the carrier wave *Sc* in the 4-step current commutation method at *Io* < 0. As illustrated in FIG. 7, the output phase voltage *Vo* is not switched at the timing when the input phase voltage *Vi* is switched as specified in the PWM control command *Vo1**, similarly to the case at *Io >0.*

Specifically, the output phase voltage *Vo* is switched at the timings when step 2 is performed after timings *ta1* and *ta2*, and at the timings when step 3 is performed after timings *ta3* and timing *ta4*. Thus, an error of *-(Ep - En)* x *Td 2*/*Tsc* occurs in the output phase voltage *Vo* with respect to the PWM control command *Vo1** in one cycle *Tsc* of the carrier wave *Sc.*

Thus, in the commutation control using the current commutation method, the timing at which the output phase voltage *Vo* is changed varies depending on whether the voltage is increasing (*v*2 to *v1*) or decreasing (*v1* to v2). This causes the output phase voltage *Vo* to have an error (hereinafter referred to as an output voltage error *Voerr*) with respect to the PWM control command *Vo1**, and causes the polarity of the output voltage error *Voerr* to vary depending on the polarity of the output phase current *Io.*

[2.1.2. Voltage commutation method]

The voltage commutation method is a method of commutation performed based on a commutation pattern that depends on a relationship of magnitude of the input phase voltages *Er, Es*, and *Et*. Here, a 4-step voltage commutation method will be described as an example of the voltage commutation method performed by the commutation controller 23.

In order to prevent short-circuiting between the input phases and prevent opening of the output phases, the commutation control using the 4-step voltage commutation method is based on a commutation pattern of the following steps 1 to 4 in accordance with a relationship of magnitude of the input phase voltages *Er, Es*, and *Et*. The commutation pattern in the 4-step voltage commutation method has no dependency on the polarity of the output phase current *Io*.

Step 1: Turn ON a reverse biased switching element in a switching destination.
Step 2: Turn OFF a reverse biased switching element in a switching source.
Step 3: Turn ON a forward biased switching element in the switching destination.
Step 4: Turn OFF a forward biased switching element in the switching source.

In the switching element Swa, the reverse bias refers to a state where the input side voltage is lower than the output side voltage immediately before the commutation control. The forward bias refers to a state where the input side voltage is higher than the output side voltage immediately before the commutation control. In the switching element Swb, the forward bias refers to a state where the input side voltage is lower than the output side voltage immediately before the commutation control. The reverse bias refers to a state where the input side voltage is higher than the output side voltage immediately before the commutation control.

FIGs. 8 and 9 illustrate an on-off transition of the switching element in the 4-step voltage commutation method. The switching elements Sw1p, Sw1n, Sw2p, and Sw2n, and the voltages *v1* and *v*2 are similar to those illustrated in FIGs. 4 and 6.

When the input phase voltage *Vi* at *Io* > 0 is switched from *v1* to *v*2 as specified in the PWM control command *Vo1**, the output phase voltage *Vo* is switched at the timing when step 2 is performed (timing *t*2) as illustrated in FIG. 8. When the input phase voltage *Vi* at *Io* > 0 is switched from *v*2 to *v1* as specified in the PWM control command *Vo1**, the output phase voltage *Vo* is switched at the timing when step 3 is performed (timing *t*3). Thus, the output voltage error *Voerr* in the case of the voltage commutation method at *Io* > 0 is similar to the output voltage error *Voerr* in the case of the current commutation method at *Io* < 0 (see FIG. 7). Namely, the output voltage error *Voerr* is -(*Ep - En)* x *Td2*/*Tsc.*

When the input phase voltage *Vi* at *Io* < 0 is switched from *v1* to *v*2 as specified in the PWM control command *Vo1**, the output phase voltage *Vo* is switched at the timing when step 3 is performed (timing *t*3) as illustrated in FIG. 9. When the input phase voltage *Vi* at *Io* < 0 is switched from *v*2 to *v1* as specified in the PWM control command *Vo1**, the output phase voltage *Vo* is switched at the timing when step 2 is performed (timing *t*2). Thus, the output voltage error *Voerr* in the case of the voltage commutation method at *Io* < 0 is similar to the output voltage error *Voerr* in the case of the current commutation method at *Io* > 0 (see FIG. 5). Namely, the output voltage error *Voerr* is *(Ep - En)* x *Td2*/*Tsc.*

Thus, the commutation control using the voltage commutation method is similar to the commutation control using the current commutation method in that the timing at which the output phase voltage *Vo* is changed varies depending on whether the voltage is increasing (v2 to *v1*) or decreasing (*v1* to v2). This causes the output phase voltage *Vo* to have an output voltage error *Voerr* with respect to the PWM control command *Vo1**, and causes the polarity of the output voltage error *Voerr* to vary depending on the polarity of the output phase current *Io.* In addition, the polarity of the output voltage error *Voerr* with respect to the polarity of the output phase current *Io* is different between the voltage commutation method and the current commutation method.

[2.2. Method of power conversion modulation]

Examples of the method of modulation performed by the control information generator 22 include, but are not limited to, a two-phase modulation method and a three-phase modulation method. The control information generator 22 selects one of the two-phase modulation method and the three-phase modulation method based on the modulation parameter *Pm* stored in the setting information storage 20, and generates the control information *Tru, Trv,* and *Trw* based on the selected method. For example, when *Pm* = 0, the control information generator 22 selects the two-phase modulation method. When *Pm* = 1, the control information generator 22 selects the three-phase modulation method.

By the modulation method corresponding to the modulation method parameter *Pm*, the control information generator 22 uses the space vector method to calculate the ratio of the output vector that specifies the pulse width of PWM control. The space vector method, the two-phase modulation method, and the three-phase modulation method will be described below in this order.

[2.2.1. Space vector method]

FIG. 10 illustrates exemplary output voltage space vectors. As illustrated in FIG. 10, each output voltage space vector is for the *R* phase, the S phase, and the *T* phase with a maximum voltage phase denoted as *P,* a minimal voltage phase denoted as *N*, and an intermediate voltage phase denoted as *M*.

In FIG. 10, the vector expression "*a* vector" denotes a state in which any one of the output phases *U, V,* and *W* is coupled to the maximum voltage phase *P* while the rest of the output phases *U, V,* and W are coupled to the minimal voltage phase *N.* The vector expression "*b* vector" denotes a state in which any one of the output phases is coupled to the minimal voltage phase *N* while the rest of the output phases are coupled to the maximum voltage phase *P.* For example, when the *U* phase is coupled to the maximum voltage phase *P* while the *V* phase and the *W* phase are coupled to the minimal voltage phase *N,* this state is denoted as *PNN,* which is a "*a* vector". Similarly, *NPN* and *NNP* are "*a* vectors". *PPN, PNP,* and *NPP* are "*b* vectors".

The vector expressions *"ap* vector", *"an* vector", *"bp* vector", and *"bn* vector" each denote a state in which one or some of the output phases is or are coupled to the intermediate voltage phase *M.* For example, the *"ap* vector" denotes a state in which any one of the output phases is coupled to the maximum voltage phase P while the rest of the output phases are coupled to the intermediate voltage phase *M.* The *"an* vector" denotes a state in which any one of the output phases is coupled to the intermediate voltage phase *M* while the rest of the output phases are coupled to the minimal voltage phase *N.* The *"bp* vector" denotes a state in which any two of the output phases are coupled to the maximum voltage phase *P* while the other one of the output phases is coupled to the intermediate voltage phase *M.* The *"bn* vector" denotes a state in which any two of the output phases are coupled to the intermediate voltage phase *M* while the other one of the output phases is coupled to the minimal voltage phase *N.* It is noted that $a = ap + an$, and $b = bp + bn$.

The vector expression "*cm* vector" denotes a state in which the *U* phase, the *V* phase, and the *W* phase are coupled to different input phases. The vector expressions "*on* vector", "*om* vector", and *"op* vector" denote a state in which all the *U* phase, *V* phase, and *W* phase are coupled to the same input phase. The vector expression "*on* vector" denotes a state in which all the output phases are coupled to the minimal voltage phase *N.* The vector expression "*om* vector" denotes a state in which all the output phases are coupled to the intermediate voltage phase *M.* The vector expression "*op* vector" denotes a state in which all the output phases are coupled to the maximum voltage phase *P.*

FIG. 11 illustrates an exemplary relationship between the output voltage command $Vo^*$ and the space vectors. As illustrated in FIG. 11, the control information generator 22 generates the control information *Tru, Trv,* and *Trw* based on a switching pattern that is a combination of a plurality of output vectors so as to output an "*a* vector component *Va*" and a "*b* vector component *Vb*" of the output voltage command $Vo^*$. The combination is selected from among the "*a* vector", the *"ap* vector", the *"an* vector", the "b vector", the *"bp* vector", the "*bn* vector", the "*cm* vector", the *"op* vector", the *"om* vector", and the *"on* vector".

The control information generator 22 calculates the *a* vector component *Va* and the *b* vector component *Vb* based on following exemplary Formulae (1) and (2), where *Vmax* represents a maximum value, *Vmid* represents an intermediate value, and *Vmin* represents a minimal value among the output voltage commands $Vu^*$, $Vv^*$, and $Vw^*$.

$$|Va| = Vmax - Vmid \quad \cdots (1)$$

$$|Vb| = Vmid - Vmin \quad \cdots (2)$$

The control information generator 22 regards as the base voltage *Ebase* an input phase voltage *Vi* with the greatest absolute value among the input phase voltages *Er, Es,* and *Et.* When the base voltage *Ebase* is *Ep,* the control information generator 22 calculates a current division ratio α based on the following exemplary Formula (3). When the base voltage *Ebase* is *En,* the control information generator 22 calculates the current division ratio α based on the following exemplary Formula (4). In Formulae (3) and (4), *Ip, Im*, and *In* are among the input current commands $Ir^*$, $Is^*$, and $It^*$, and respectively represent current command values of phases corresponding to the input phase voltages *Ep, Em,* and *En.*

$$\alpha = Im/In \quad \cdots (3)$$

$$\alpha = Im/Ip \quad \cdots (4)$$

The input current commands $Ir^*$, $Is^*$, and $It^*$ are generated in an input power control section (not illustrated) of the controller 14 based on, for example, a positive phase voltage, an inverse phase voltage, and a set power factor command. The input current commands $Ir^*$, $Is^*$, and $It^*$ cancel out the influence of imbalance voltage and control the power factor of input current at a desired value.

The setting information storage 20 stores a modulation method parameter *Pm.* When the modulation method parameter *Pm* denotes the two-phase modulation, the control information generator 22 selects one switching pattern among four types of switching patterns illustrated in Table 1. Specifically, the control information generator 22 selects the switching pattern based on whether the base voltage *Ebase* is the input phase voltage *Ep* or *En,* and based on whether the phase state of the input phase voltage *Vi* satisfies $|Vb| - \alpha|Va| \geq 0$. Based on the output voltage commands $Vu^*$, $Vv^*$, and $Vw^*$, the control information generator 22 calculates a ratio of each of the output vectors constituting the selected switching pattern.

When, for example, the control information generator 22 has selected the switching pattern with pattern number "1", the control information generator 22 calculates *Top, Tbp, Tb, Tcm,* and *Ta* in a carrier valley-to-top half-cycle of the carrier wave *Sc. Top, Tbp, Tb, Tcm,* and *Ta* respectively represent the ratio of the "*op* vector", the ratio of the "*bp* vector", the ratio of the "*b* vector", the ratio of the "*cm* vector", and the ratio of the "*a* vector".

[Table 1]

| Condition | Switching pattern | | Pattern number |
|---|---|---|---|
| | Carrier half-cycle (valley → top) | Carrier half-cycle (top → valley) | |
| $Ebase \geq 0$, $\|Vb\| - \alpha\|Va\| \geq 0$ | *op → bp → b → cm → a* | *a → cm → b → bp → op* | 1 |
| $Ebase \geq 0$, $\|Vb\| - \alpha\|Va\| < 0$ | *op → bp → ap → cm → a* | *a → cm → ap → bp → op* | 2 |
| $Ebase < 0$, $\|Vb\| - \alpha\|Va\| \geq 0$ | *b → cm → a → an → on* | *on → an → a → cm → b* | 3 |
| $Ebase < 0$, $\|Vb\| - \alpha\|Va\| < 0$ | *a → cm → bn → an → on* | *on → an → bn → cm → a* | 4 |

When the modulation method parameter *Pm* denotes the three-phase modulation, the control information generator 22 selects the switching pattern illustrated in Table 2. Based on the output voltage commands $Vu^*$, $Vv^*$, and $Vw^*$, the control information generator 22 calculates the ratio of each of the output vectors constituting the selected switching pattern.

[Table 2]

| Switching pattern | |
|---|---|
| Carrier half-cycle (valley → top) | Carrier half-cycle (top → valley) |
| *op → bp → ap → om → bn → an → on* | *on → an → bn → om → ap → bp → op* |

The control information generator 22 generates control information *Tru, Trv,* and *Trw*. Each control information specifies the ratio of each of the output vectors constituting the selected switching pattern, and specifies pattern number. The control information generator 22 outputs the control information to the error compensator 24.

[2.2.2. Two-phase modulation method]

When the control information generator 22 has selected the two-phase modulation method, the control information generator 22 generates control information *Tru, Trv,* and *Trw* to fix the input phase voltage of one output phase among the *U* phase, the *V* phase, and the *W* phase is fixed to the base voltage *Ebase* and then output while switching the input phase voltages of the remaining two output phases between *Ep, Em,* and *En.* In the two-phase modulation method, the switching pattern varies depending on the base voltage *Ebase* and on the phase of the input phase voltage *Vi*, as described above.

FIGs. 12 to 15 illustrate a relationship between the carrier wave *Sc,* the output phase voltages *Vu, Vv,* and *Vw*, and the base voltage *Ebase* in the two-phase modulation method in the relationship *Vu* > *Vv* > *Vw.* FIGs. 12 and 13 illustrate an exemplary switching pattern at *Ebase* = *Ep.* FIGs. 14 and 15 illustrate an exemplary switching pattern at *Ebase* = *En.*

FIGs. 12 and 14 each illustrate such a switching pattern that the input phase voltage *Vi* output to one output phase is continuously switched, and then the input phase voltage *Vi* output to another output phase is continuously switched. FIGs. 13 and 15 each illustrate such a switching pattern that the input phase voltage *Vi* output to one output phase and the input phase voltage *Vi* output to another output phase are alternately switched. Based on the input phase voltage *Vi*, the control information generator 22 switches between the switching patterns illustrated in FIGs. 12 and 14 and the switching patterns illustrated in FIGs. 13 and 15.

Thus, the two-phase modulation method includes four switching patterns that depend on the base voltage *Ebase* and the phase of the input phase voltage *Vi*.

[2.2.3. Three-phase modulation method]

The three-phase modulation method is a method by which the input phase voltages at all the output phases *U* phase, *V* phase, and *W* phase are switched between *Ep, Em,* and *En.* The three-phase modulation method has a single switching pattern.

FIG. 16 illustrates an exemplary relationship between the carrier wave *Sc* and the output phase voltages *Vu*, *Vv,* and *Vw* in the three-phase modulation method in the relationship *Vu* > *Vv* > *Vw*. As illustrated in FIG. 16, in the three-phase modulation method, the power converter 10 outputs PWM pulse voltage to the U phase, the V phase, and the W phase. In the PWM pulse voltage, the input phase voltage *Vi* changes in the following manner: $Ep \rightarrow Em \rightarrow Em \rightarrow En \rightarrow En \rightarrow Em \rightarrow Em \rightarrow Ep$. FIG. 16 illustrates a state of commutation control using the current commutation method at *Io* > 0.

[2.3. Output voltage error compensation]

As described above, the output voltage error correction is performed by the error compensator 24. As illustrated in FIG. 3, the error compensator 24 includes the compensation amount calculator 31 and the pulse width adjustor 32.

The compensation amount calculator 31 calculates the compensation amount to compensate for the output voltage error *Voerr.* Specifically, the compensation amount calculator 31 calculates compensation amounts *Tcp(max), Tcp(mid),* and *Tcp(min)* based on the type of the commutation method, the polarity of the output phase current *Io,* the commutation times *Td1* and *Td2*, and the number of valleys and tops of the carrier wave *Sc* in a calculation cycle of the compensation amount *Tc.*

*Tcp(max)* is a compensation amount with respect to the maximum output voltage phase. *Tcp(mid)* is a compensation amount with respect to the intermediate output voltage phase. *Tcp(min)* is a compensation amount with respect to the minimal output voltage phase. The maximum output voltage phase is an output phase corresponding to the *Vmax.* The intermediate output voltage phase is an output phase corresponding to *Vmid.* The minimal output voltage phase is an output phase corresponding to *Vmin.* In the following description, *Tcp(max), Tcp(mid),* and *Tcp(min)* will be collectively referred to as *Tcp(o).* In the correction amount calculation cycle *Tc,* the number of tops of the carrier wave *Sc* will be referred to as *Cy*, the number of valleys of the carrier wave *Sc* will be referred to as *Ct,* and the number of the tops and the valleys of the carrier wave *Sc* will be referred to as *Cyt.*

The correction amount calculation cycle *Tc* is the same as the cycle at which the voltage command generator 21 calculates the output voltage command $Vo^*$. Thus, the compensation amount *Tcp(o)* is calculated at each cycle of calculation of the output voltage command $Vo^*$. This improves the accuracy of the compensation amount *Tcp(o).* It is noted that the correction amount calculation cycle *Tc* may be 1/n (n is a natural number) of the cycle of calculation of the output voltage command $Vo^*$.

By referring to FIG. 17, detailed description will be made with regard to compensation amount calculation performed by the compensation amount calculator 31. FIG. 17 is a flowchart of an example of compensation amount calculation processing performed by the compensation amount calculator 31. The compensation amount calculation is performed for each of the output phases, namely, the *U* phase, the *V* phase, and the *W phase.*

As illustrated in FIG. 17, the compensation amount calculator 31 determines whether the commutation method is the current commutation method based on the commutation method setting parameter *Pt* stored in the setting information storage 20 (step St1).

When the compensation amount calculator 31 determines that the commutation method is the current commutation method (step St1; Yes), the compensation amount calculator 31 determines whether the polarity of the output phase current *Io* is positive (step St2). For example, in the compensation amount calculation processing for the *U* phase, the compensation amount calculator 43 determines whether the polarity of the output phase current *Iu* is positive.

When at step St1 the compensation amount calculator 31 determines that the commutation method is the voltage commutation method instead of the current commutation method (step St1; No), the compensation amount calculator 31 determines whether the polarity of the output phase current *Io* is positive (step St3), similarly to the processing at step St2.

When at step St2 the compensation amount calculator 31 determines that the polarity of the output phase current *Io* is positive (step St2; YES), or when the compensation amount calculator 31 determines that the polarity of the output phase current *Io* is not positive (step St3; No), the compensation amount calculator 31 performs first compensation amount calculation processing (step St4). At step St4, the compensation amount calculator 31 performs the first compensation amount calculation processing using, for example, the following Formula (5) to obtain the compensation amount *Tcp(o).*

[Expression 1]

$$\mathrm{Tcp(o)} = \frac{(\mathrm{Td1} + \mathrm{Td2}) \cdot \mathrm{Ct} - \mathrm{Td1} \cdot \mathrm{Cy}}{\mathrm{Cyt}} \quad \cdots (5)$$

When at step St2 the compensation amount calculator 31 determines that the polarity of the output phase current *Io* is not positive (step St2; No), or when the compensation amount calculator 31 determines that the polarity of the output phase current *Io* is positive (step St3; YES), the compensation amount calculator 31 performs second compensation amount calculation processing (step St5). At step St5, the compensation amount calculator 31 performs the second compensation amount calculation processing using, for example, the following Formula (6) to obtain the compensation amount *Tcp(o).*

[Expression 2]

$$\mathrm{Tcp(o)} = \frac{\mathrm{Td1} \cdot \mathrm{Ct} - (\mathrm{Td1} + \mathrm{Td2}) \cdot \mathrm{Cy}}{\mathrm{Cyt}} \quad \cdots (6)$$

Thus, the compensation amount calculator 31 calculates the compensation amount *Tcp(o)* for each output phase based on the type of the commutation method, based on the output phase current *Io,* and based on the number of tops and valleys of the carrier wave *Sc* in the correction amount calculation cycle *Tc.* The compensation amount calculator 31 calculates *Cy*, *Ct,* and *Cyt* based on, for example, the carrier frequency setting parameter *Pf.* For example, when *Pf* = 0 as illustrated in FIG. 18, then *Tc* = *Tsc*/2, *Cy* = 0, *Ct* = 1, and *Cyt* = 1, or *Tc* = *Tsc*/2, *Cy* = 1, *Ct* = 0, and *Cyt* = 1. When *Pf* = 1, then *Tc* = *Tsc, Cy* = 1, *Ct* = 1, and *Cyt* = 2. When *Pf* = 2, then *Tc* = *3Tsc*/2, *Cy* = 1, *Ct* = 2, and *Cyt* = 3, or *Tc* = *3Tsc*/2, *Cy* = 2, *Ct* = 1, and *Cyt* = 3. FIG. 18 illustrates an exemplary relationship between the carrier wave *Sc* and the correction amount calculation cycle *Tc.*

Based on the switching pattern selected by the control information generator 22, the pulse width adjustor 32 corrects the control information *Tru, Trv,* and *Trw* output from the control information generator 22. As described later, "*Tcp(o)* x 2*fs*" refers to a compensation amount that depends on the carrier wave *Sc.* "*Tcp(o)* x 2*fs*" may be calculated by the compensation amount calculator 31 instead of the pulse width adjustor 32.

Specifically, when *Pm* = 0 and the selected switching pattern has pattern number "I", the pulse width adjustor 32 uses the following Formula (7) to calculate, for example, timings *T1* to *T5* respectively corresponding to times *t11* to *t15* illustrated in FIG. 12. *Tcp(o)* x *2fs* is a ratio of the compensation amount in a carrier half-cycle. The pulse width adjustor 32 calculates timings *T1* to *T5* based on *fs* corresponding to the carrier frequency setting parameter *Pf* and based on *Tcp(o).* As illustrated in FIG. 12, the minimal output voltage phase continuously changes and timings *T1* and *T2* are calculated based on *Tcp(min).* Then, the intermediate output voltage phase continuously changes and timings *T3* and *T4* are calculated based on *Tcp(mid).* With respect to the remaining carrier half-cycle, timings are similarly calculated using a compensation amount.
[Expression 3]

$$\begin{aligned} T1 &= Top - Tcp(min) \cdot 2fs \\ T2 &= Top + Tbp - Tcp(min) \cdot 2fs \\ T3 &= Top + Tbp + Tb - Tcp(mid) \cdot 2fs \\ T4 &= Top + Tbp + Tb + Tcm - Tcp(mid) \cdot 2fs \\ T5 &= Top + Tbp + Tb + Tcm + Ta \end{aligned} \quad \cdots (7)$$

When *Pm* = 0 and the selected switching pattern has pattern number "2", the pulse width adjustor 32 uses the following Formula (8) to calculate, for example, timings *T1* to *T5* respectively corresponding to times *t11* to *t15* illustrated in FIG. 13. As illustrated in FIG. 13, the minimal output voltage phase and the intermediate output voltage phase alternately change, and timings *T1* and *T3* are calculated based on *Tcp(min),* while timings *T2* and *T4* are calculated based on *Tcp(mid).* With respect to the remaining carrier half-cycle, timings are similarly calculated using a compensation amount.
[Expression 4]

$$\begin{aligned} T1 &= Top - Tcp(min) \cdot 2fs \\ T2 &= Top + Tbp - Tcp(mid) \cdot 2fs \\ T3 &= Top + Tbp + Tap - Tcp(min) \cdot 2fs \\ T4 &= Top + Tbp + Tap + Tcm - Tcp(mid) \cdot 2fs \\ T5 &= Top + Tbp + Tap + Tcm + Ta \end{aligned} \quad \cdots (8)$$

When *Pm* = 0 and the selected switching pattern has the pattern number "3", the pulse width adjustor 32 uses the following Formula (9) to calculate, for example, timings *T1* to *T5* respectively corresponding to times *t11* to *t15* illustrated in FIG. 14. As illustrated in FIG. 14, the intermediate output voltage phase continuously changes and timings *T1* and *T2* are calculated based on *Tcp(mid).* Then, the maximum output voltage phase continuously changes and timings *T3* and *T4* are calculated based on *Tcp(max).* With respect to the remaining carrier half-cycle, timings are similarly calculated using a compensation amount.
[Expression 5]

$$\begin{aligned} T1 &= Tb - Tcp(mid) \cdot 2fs \\ T2 &= Tb + Tcm - Tcp(mid) \cdot 2fs \\ T3 &= Tb + Tcm + Ta - Tcp(max) \cdot 2fs \\ T4 &= Tb + Tcm + Ta + Tan - Tcp(max) \cdot 2fs \\ T5 &= Tb + Tcm + Ta + Tan + Ton \end{aligned} \quad \cdots (9)$$

When *Pm* = 0 and the selected switching pattern has pattern number "4", the pulse width adjustor 32 uses the following Formula (10) to calculate, for example, timings *T1* to *T5* respectively corresponding to times *t11* to *t15* illustrated FIG. 15. As illustrated in FIG. 15, the intermediate output voltage phase and the maximum output voltage phase alternately change, and timings *T1* and *T3* are calculated based on *Tcp(mid),* while timings *T2* and *T4* are calculated based on *Tcp(max).* With respect to the remaining carrier half-cycle, timings are similarly calculated using a compensation amount.
[Expression 6]

$$\begin{aligned} T1 &= Tb - Tcp(mid)\cdot 2fs \\ T2 &= Tb + Tcm - Tcp(max)\cdot 2fs \\ T3 &= Tb + Tcm + Tbn - Tcp(mid)\cdot 2fs \\ T4 &= Tb + Tcm + Tbn + Tcm - Tcp(max)\cdot 2fs \\ T5 &= Tb + Tcm + Tbn + Tcm + Ton \end{aligned} \quad \cdot\cdot\cdot (10)$$

When *Pm* = 1, the pulse width adjustor 32 uses the following Formula (11) to calculate timings *T1* to *T7* respectively corresponding to times *t11* to *t17* illustrated in FIG. 16. As illustrated in FIG. 16, the minimal output voltage phase, the intermediate output voltage phase, and the maximum output voltage phase sequentially change. Thus, timings *T1* and *T4* are calculated based on *Tcp(min).* In addition, timings *T2* and *T5* are calculated based on *Tcp(mid),* and timings *T3* and *T6* are calculated based on *Tcp(max).* With respect to the remaining carrier half-cycle, timings are similarly calculated using a compensation amount.
[Expression 7]

$$\begin{aligned} T1 &= Top - Tcp(min)\cdot 2fs \\ T2 &= Top + Tbp - Tcp(mid)\cdot 2fs \\ T3 &= Top + Tbp + Tap - Tcp(max)\cdot 2fs \\ T4 &= Top + Tbp + Tap + Tom - Tcp(min)\cdot 2fs \\ T5 &= Top + Tbp + Tap + Tom + Tbn - Tcp(mid)\cdot 2fs \\ T6 &= Top + Tbp + Tap + Tom + Tbn + Tan - Tcp(max)\cdot 2fs \\ T7 &= Top + Tbp + Tap + Tom + Tbn + Tan + Ton \end{aligned} \quad \cdot\cdot\cdot (11)$$

Based on timings *T1* to *T5* (*T1* to *T7*) calculated for each output phase, the pulse width adjustor 32 generates the PWM control commands $Vu\ 1^*$, $Vv\ 1^*$, and $Vw\ 1^*$, which specify the input phase voltage *Vi* to be output to the output phases. The pulse width adjustor 32 outputs the generated PWM control command $Vu1^*$, $Vv1^*$, $Vw1^*$ to the commutation controller 23.

Thus, the error compensator 24 compensates for output voltage error based on the setting information stored in the setting information storage 20. Thus, the matrix converter 1 according to the embodiment ensures accuracy in preventing the output voltage error *Voerr* even when the type of the commutation method or the type of the modulation method is switched to another type. In addition, the matrix converter 1 according to the embodiment corrects the output voltage error *Voerr* based on the commutation time parameters *Td1* and *Td2*, which are used for the commutation control. Thus, the matrix converter 1 according to the embodiment ensures accuracy in preventing the output voltage error *Voerr.*

[3. Second exemplary configuration of the controller 14]

Next, the second exemplary configuration of the controller 14 will be described. In the following description, the controller in the second exemplary configuration will be denoted at reference numeral 14A in order to distinguish it from the controller 14 in the first exemplary configuration.

FIG. 19 is an exemplary configuration of the controller 14A. As illustrated in FIG. 19, the controller 14A includes the setting information storage 20, the voltage command generator 21, a control information generator 22A, the commutation controller 23, and an error compensator 24A. The setting information storage 20, the voltage command generator 21, and the commutation controller 23 of the controller 14A are respectively similar to the setting information storage 20, the voltage command generator 21, and the commutation controller 23 of the controller 14 in the first exemplary configuration, and thus will not be elaborated here.

Based on the corrected output voltage commands $Vu^*$, $Vv^*$, and $Vw^*$ corrected by the error compensator 24A, the control information generator 22A uses the space vector method to generate the PWM control commands $Vu1^*$, $Vv1^*$, and $Vw1^*$ (exemplary control information) to control the bidirectional switch Sw.

Specifically, the control information generator 22A uses a method similar to the method used for the control information generator 22 to calculate the ratios of the output vectors corresponding to the output voltage commands $Vu^*$, $Vv^*$, and $Vw^*$, and generates the PWM control commands $Vu1^*$, $Vv1^*$, and $Vw1^*$ based on the ratios of the output vectors. The control information generator 22A calculates timings *T1* to *T5 (T1* to *T7*) for each output phase based on, for example, Formulae (8) to (11), less the subtraction portions of the compensation amounts *Tcp(o)* x *2fs.*

Based on the timings *T1* to *T5* (*T1* to *T7*) calculated for each output phase, the control information generator 22A generates the PWM control commands $Vu1^*$, $Vv1^*$, and $Vw1^*$, which specify the input phase voltage *Vi* to be output to the output phases. Then, the control information generator 22A outputs the generated PWM control commands $Vu1^*$, $Vv1^*$, and $Vw1^*$ to the commutation controller 23.

The error compensator 24A calculates a compensation amount to compensate for the output voltage error *Voerr.* The error compensator 24A includes a compensation amount calculator 31A and a command corrector 32A.

Similarly to the compensation amount calculator 31, the compensation amount calculator 31A calculates the compensation amount *Tcp(o)* based on the setting information stored in the setting information storage 20. Based on the setting information stored in the setting information storage 20, the compensation amount calculator 31A calculates the voltage command compensation amount *Vcp(o)* corresponding to the compensation amount *Tcp(o).* Specifically, the compensation amount calculator 31A calculates voltage command compensation amounts *Vcp(max), Vcp(mid),* and *Vcp(min)* respectively corresponding to the compensation amounts *Tcp(max), Tcp(mid),* and *Tcp(min).*

When *Pm* = 0 and the selected switching pattern has the pattern number "1" or "2", the compensation amount calculator 31A calculates the voltage command compensation amount *Vcp(o)* using, for example, the following Formula (12). It is noted that the maximum value among the output voltage commands $Vu^*$, $Vv^*$, and $Vw^*$ is referred to as *Vmax,* the intermediate value is referred to as *Vmid*, and the minimal value is referred to as *Vmin.*

[Expression 8]

$$\begin{aligned} Vcp(min) &= \frac{Vmin \cdot Tcp(min)}{Tsc/2} \\ Vcp(mid) &= \frac{Vmid \cdot Tcp(mid)}{Tsc/2} \end{aligned} \quad \cdots (12)$$

When *Pm* = 0 and the selected switching pattern has the pattern number "3" or "4", the compensation amount calculator 31A calculates the voltage command compensation amount *Vcp(o)* using, for example, the following Formula (13).

[Expression 9]

$$\begin{aligned} Vcp(mid) &= \frac{Vmid \cdot Tcp(mid)}{Tsc/2} \\ Vcp(max) &= \frac{Vmax \cdot Tcp(max)}{Tsc/2} \end{aligned} \quad \cdots (13)$$

When *Pm* = 1, the compensation amount calculator 31A calculates the voltage command compensation amount *Vcp(o)* using, for example, the following Formula (14).

[Expression 10]

$$\begin{aligned} Vcp(min) &= \frac{Vmin \cdot Tcp(min)}{Tsc/2} \\ Vcp(mid) &= \frac{Vmid \cdot Tcp(mid)}{Tsc/2} \\ Vcp(max) &= \frac{Vmax \cdot Tcp(max)}{Tsc/2} \end{aligned} \quad \cdots (14)$$

The command corrector 32A adds the voltage command compensation amount *Vcp(o)* to the output voltage command $Vo^*$ to correct the output voltage command $Vo^*$. Then, the command corrector 32A outputs as the output voltage command $Vo^{**}$ the corrected output voltage command $Vo^*$ to the control information generator 22A.

Specifically, the command corrector 32A adds *Vcp(max)* to the output voltage command $Vo^*$ of the maximum value *Vmax,* adds *Vcp(mid)* to the output voltage command $Vo^*$ of the intermediate value *Vmid,* and adds *Vcp(min)* to the output voltage command of the minimal value *Vmin.* The command corrector 32A outputs as the output voltage command $Vo^{**}$ the corrected output voltage command $Vo^{*}$ to the control information generator 22A.

Thus, the error compensator 24A compensates for output voltage error based on the setting information stored in the setting information storage 20. Thus, the matrix converter 1 according to the embodiment ensures accuracy in preventing the output voltage error *Voerr* even when the type of the commutation method and the type of the modulation method are switched. In addition, the matrix converter 1 according to the embodiment corrects the output voltage error *Voerr* based on the time parameters *Td1* and *Td2*, which are used for the commutation control. Thus, the matrix converter 1 according to the embodiment ensures accuracy in preventing the output voltage error *Voerr.*

In the above-described embodiments, the controllers 14 and 14A have been described as using the space vector method to generate the PWM control command $Vo1^{*}$. It is also possible to use a triangular wave comparison method to generate the PWM control command $Vo1^{*}$. This case is similar to the case of using the space vector method in that the error compensators 24 and 24A calculate the compensation amount *Tcp(o)* corresponding to the output voltage error *Voerr* caused by the commutation control, and compensate for the output voltage error *Voerr* based on the compensation amount *Tcp(o).* This ensures accuracy in eliminating or minimizing the output voltage error *Voerr.*

In generating the PWM control command $Vo1^{*}$, the controllers 14 and 14A may also select between the space vector method and the triangular wave comparison method based on information input by a user or a person in charge of installation through the input device (not illustrated) of the matrix converter 1.

In the above-described embodiments, the controllers 14 and 14A have been described as selecting one commutation method from two commutation methods. It is also possible for the controllers 14 and 14A to select one commutation method from among equal to or more than three commutation methods based on the modulation method parameter *Pm.*

In the above-described embodiments, the control information *Tru, Trv,* and *Trw*, which are output from the control information generator 22, have been described as specifying the ratios of vectors. It is also possible for the control information generator 22 to generate such control information *Tru, Trv,* and *Trw* that specify timings of PWM control.

Obviously, numerous modifications and variations of the present disclosure are possible in light of the above teachings. It is therefore to be understood that within the scope of the appended claims, the present disclosure may be practiced otherwise than as specifically described herein.

| | |
|---|---|
| 1 | Matrix converter |
| 2 | AC power supply |
| 3 | Load |
| 10 | Power converter |
| 11 | LC filter |
| 12 | Input voltage detector |
| 13 | Output current detector |
| 14, 14A | Controller |
| 20 | Setting information storage |
| 21 | Voltage command generator |
| 22, 22A | Control information generator |
| 23 | Commutation controller |
| 24, 24A | Error compensator |
| 31, 31A | Compensation amount calculator |
| 32 | Pulse width adjustor |
| 32A | Command corrector |
| Swa, Swb | Switching element |

## Claims

**1.** A matrix converter (1), **characterized by**:

a power converter (10) comprising a plurality of bidirectional switches each having a conducting direction controllable by a plurality of switching elements, the plurality of bidirectional switches being disposed between a plurality of input terminals and a plurality of output terminals, the plurality of input terminals being respectively coupled to phases of an AC power source, the plurality of output terminals being respectively coupled to phases of a load;

a control information generator (22, 22A) configured to generate control information to control the plurality of bidirectional switches;

a commutation controller (23) configured to control each of the plurality of switching elements based on the control information so as to perform commutation control;
a storage (20) configured to store setting information of at least one of a method of the commutation control and a modulation method of power conversion; and
an error compensator (24, 24A) configured to compensate for an output voltage error based on the setting information.

**2.** A matrix converter (1), **characterized by**:

a power converter (10) comprising a plurality of bidirectional switches each having a conducting direction controllable by a plurality of switching elements, the plurality of bidirectional switches being disposed between a plurality of input terminals and a plurality of output terminals, the plurality of input terminals being respectively coupled to phases of an AC power source, the plurality of output terminals being respectively coupled to phases of a load;
a control information generator (22, 22A) configured to use a predetermined carrier wave to generate control information to control the plurality of bidirectional switches;
a commutation controller (23) configured to control each of the plurality of switching elements based on the control information so as to perform commutation control;
a storage (20) configured to store setting information of the carrier wave; and
an error compensator (24, 24A) configured to compensate for an output voltage error based on the setting information.

**3.** The matrix converter (1) according to claim 1 or 2, wherein the error compensator (24, 24A) comprises

a compensation amount calculator to calculate a compensation amount in accordance with the setting information, and
a corrector configured to correct the control information based on the compensation amount calculated by the compensation amount calculator.

**4.** The matrix converter (1) according to claim 1 or 2, further comprising a voltage command generator (21) configured to generate an output voltage command,

wherein the error compensator (24, 24A) comprises

a compensation amount calculator (31) configured to calculate a compensation amount in accordance with the setting information, and
a corrector (32A) configured to correct the output voltage command based on the compensation amount calculated by the compensation amount calculator (31), and

wherein the control information generator (22, 22A) is configured to generate the control information based on the output voltage command corrected by the error compensator (24, 24A).

**5.** The matrix converter (1) according to claim 3 or 4, wherein the compensation amount calculator (31) is configured to calculate the compensation amount based on a polarity of an output current obtained from the power converter (10).

**6.** The matrix converter (1) according to claim 5,

wherein the modulation method comprises

two-phase modulation by which a voltage subjected to PWM modulation is output to two phases of the load (3), and
three-phase modulation by which a voltage subjected to PWM modulation is output to three phases of the load (3),

wherein when a type of the modulation method is the two-phase modulation, the corrector (32A) is configured to perform correction with respect to each of the two phases of the load (3) based on the compensation amount, and
wherein when the type of the modulation method is the three-phase modulation, the corrector (32A) is configured to perform correction with respect to each of the three phases of the load (3) based on the compensation amount.

**7.** The matrix converter (1) according to claim 2, further comprising:

a compensation amount calculator (31) configured to calculate a compensation amount based on a frequency of the carrier wave and based on a number of tops and valleys of the carrier wave in a calculation cycle of the compensation amount; and
a corrector (32A) configured to correct the control information based on the compensation amount calculated by the compensation amount calculator (31).

**8.** A method for compensating for an output voltage error, **characterized by**:

generating control information to control a plurality of bidirectional switches respectively coupled between phases of an AC power source (2) and phases of a load (3);
controlling each of a plurality of switching elements based on the control information so as to perform commutation control, the plurality of switching elements each having a controllable conducting direction and being included in the plurality of bidirectional switches; and
performing compensation of an output voltage error based on setting information of at least one of a method of the commutation control and a modulation method of power conversion.

FIG. 1

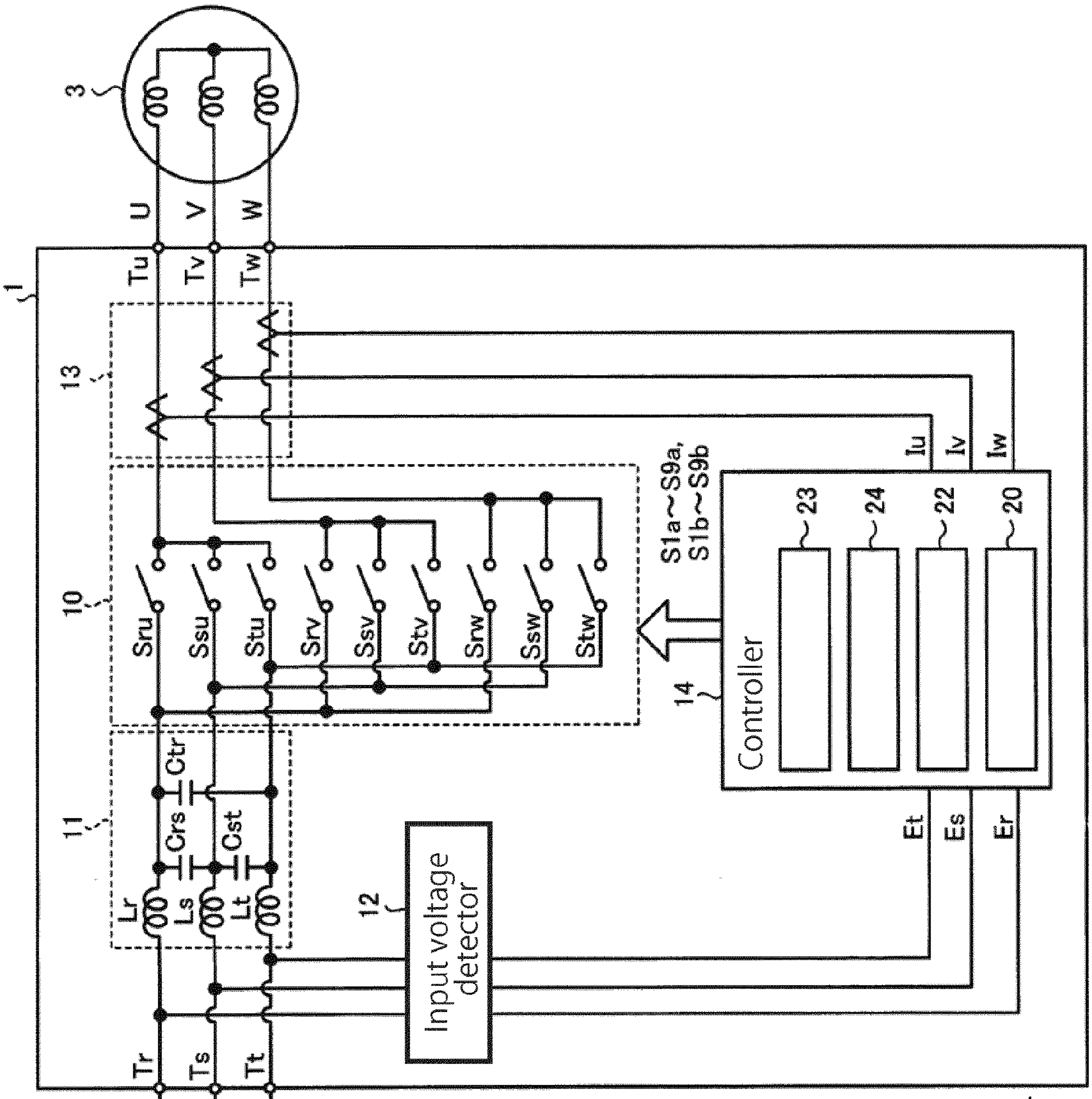


23: Commutation controller
24: Error compensator
22: Control information generator
20: Setting information storage

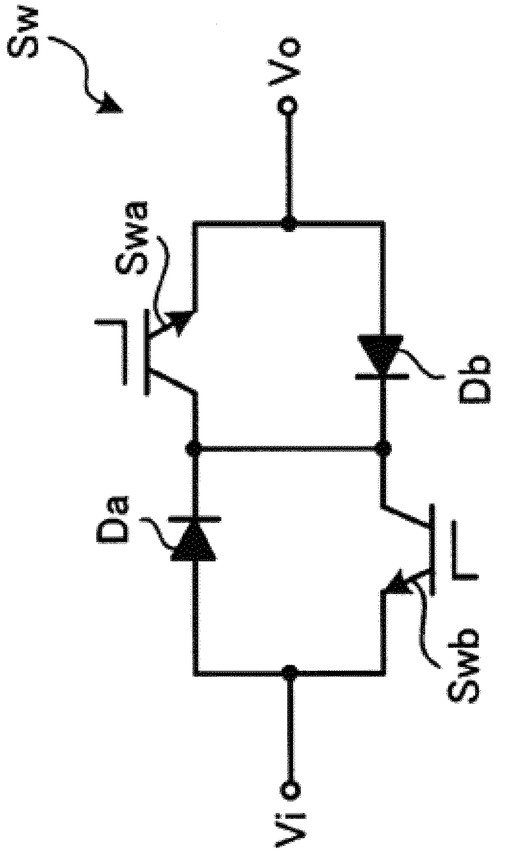


FIG. 2

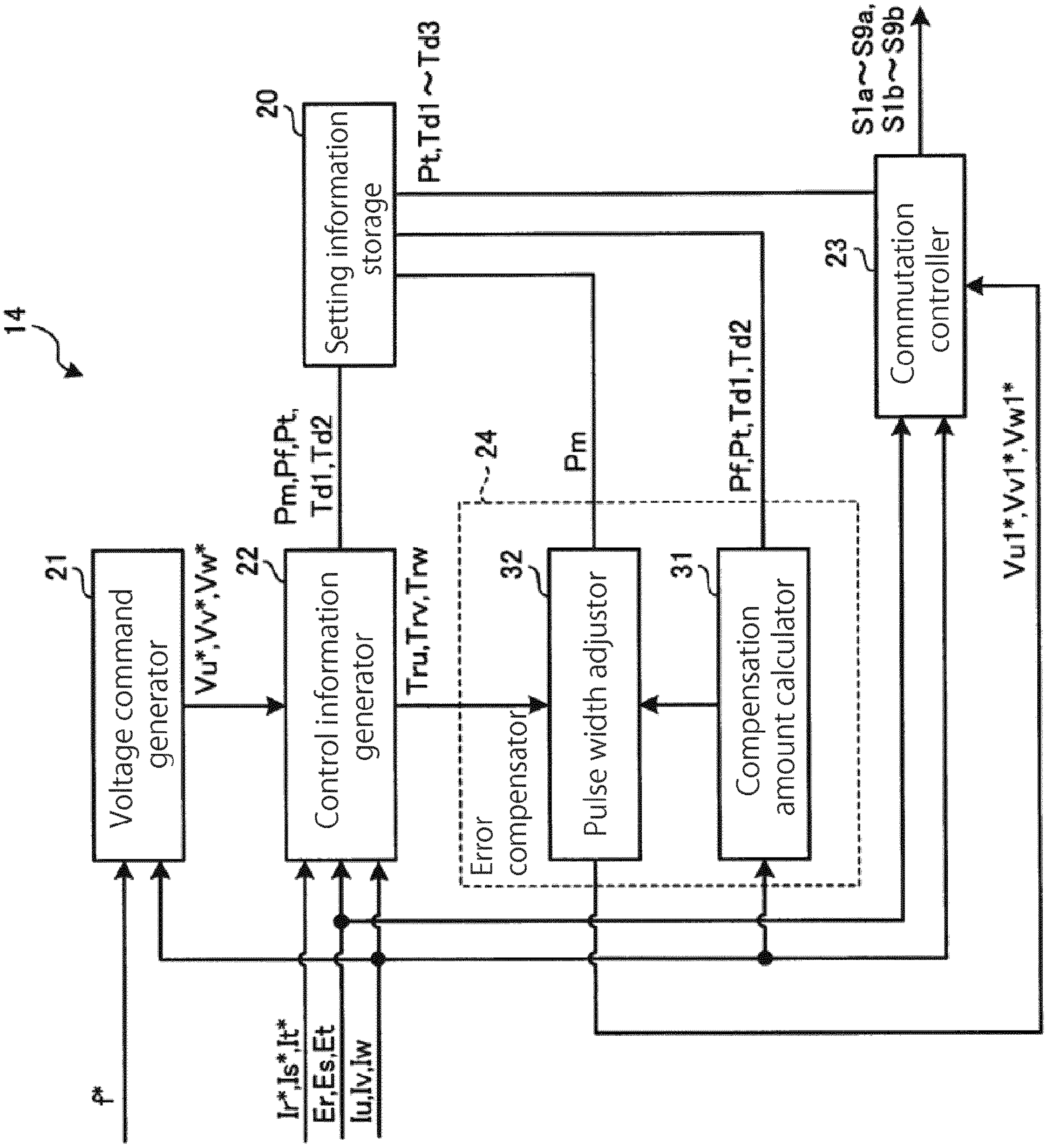
14
20
Setting information storage
Pt,Td1～Td3
S1a～S9a,
S1b～S9b
23
Commutation controller
21
Voltage command generator
Vu*,Vv*,Vw*
22
Control information generator
Pm,Pf,Pt,
Td1,Td2
Tru,Trv,Trw
24
Error compensator
Pm
32
Pulse width adjustor
Pf,Pt,Td1,Td2
31
Compensation amount calculator
Vu1*,Vv1*,Vw1*
f*
Ir*,Is*,It*
Er,Es,Et
Iu,Iv,Iw

FIG. 3

FIG. 4

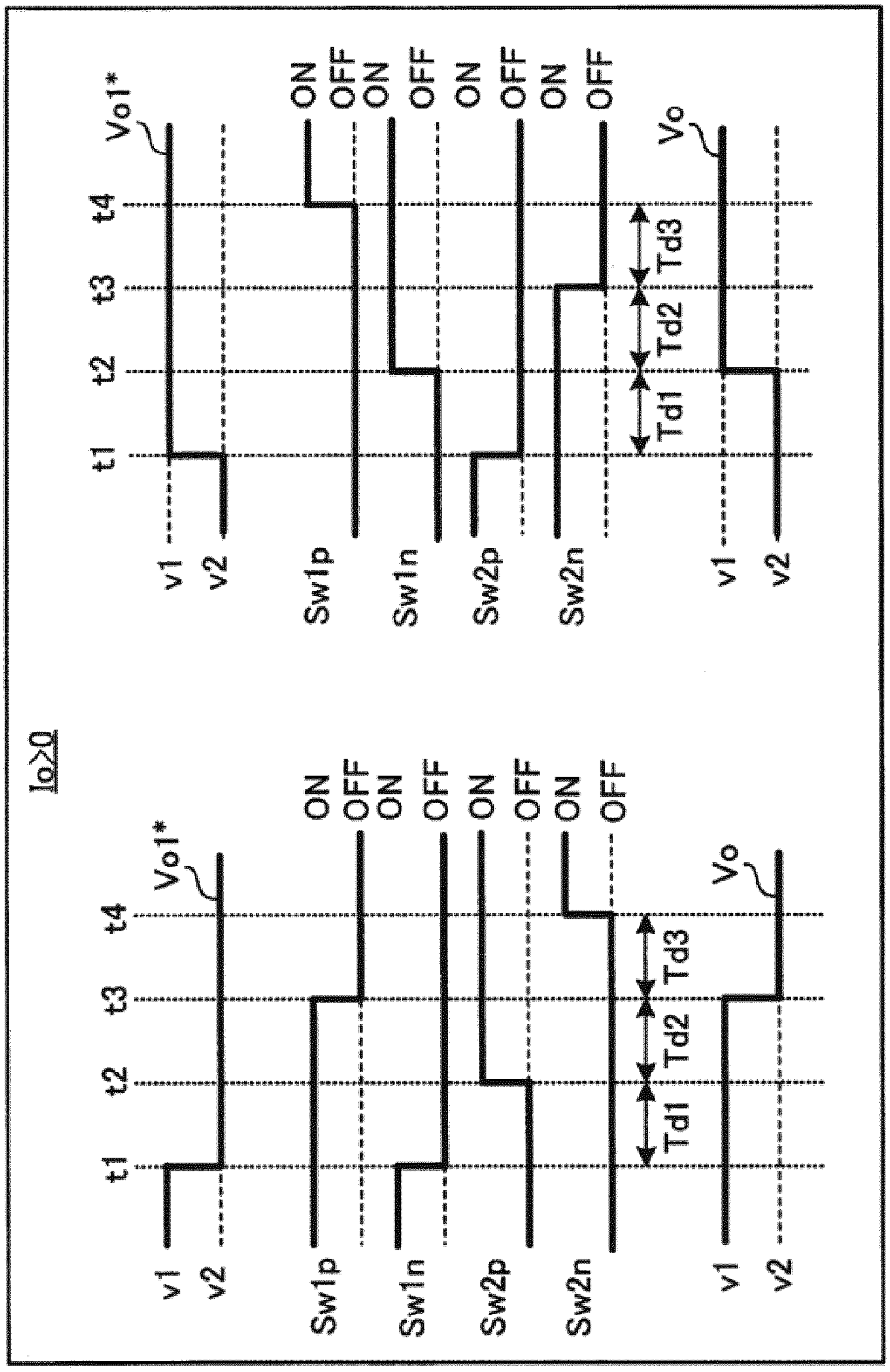
Io≥0
v1
v2
Vo1*
t1
t2
t3
t4
Sw1p
Sw1n
Sw2p
Sw2n
ON
OFF
Td1
Td2
Td3
Vo

FIG. 5

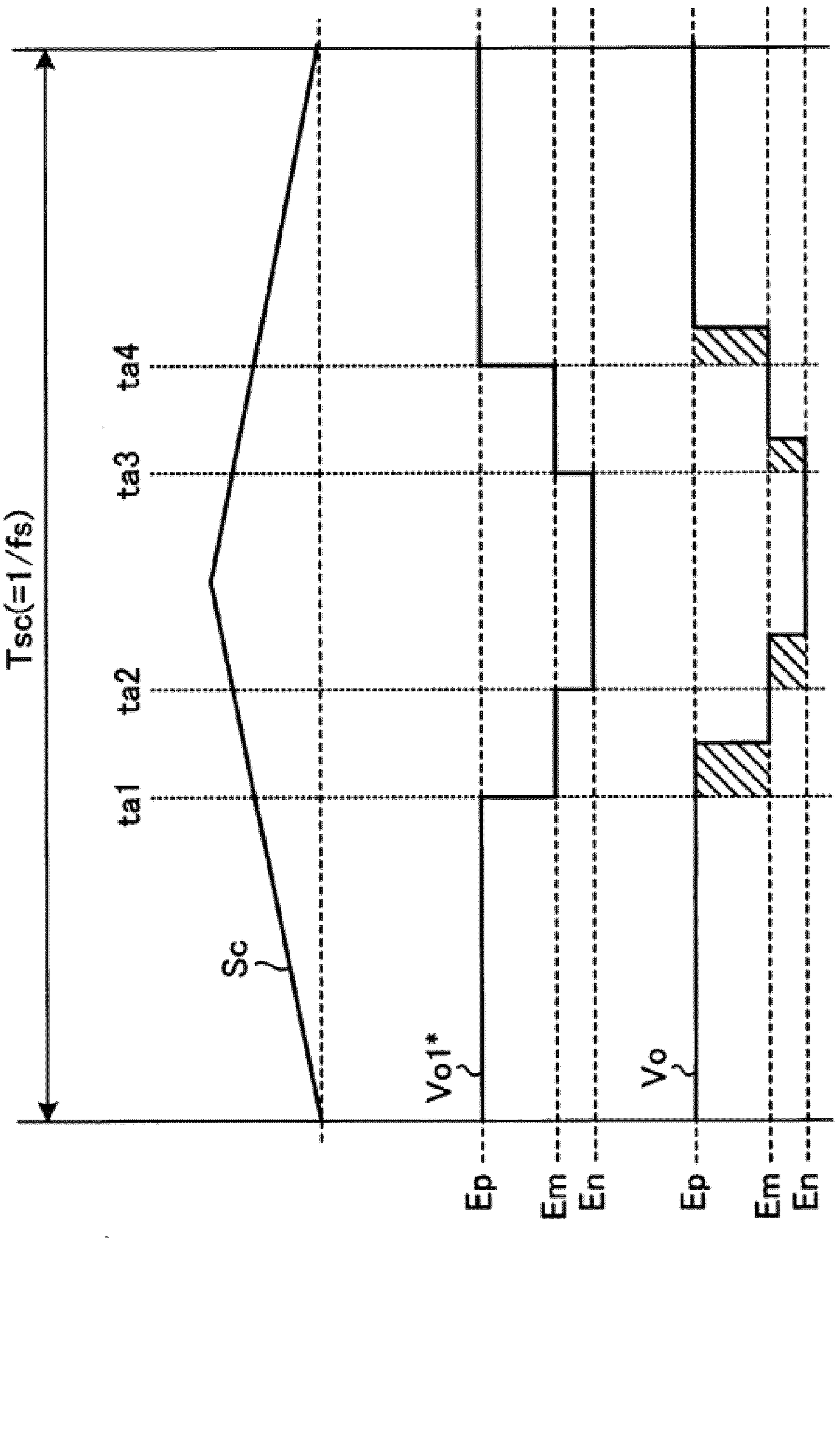

# FIG. 6

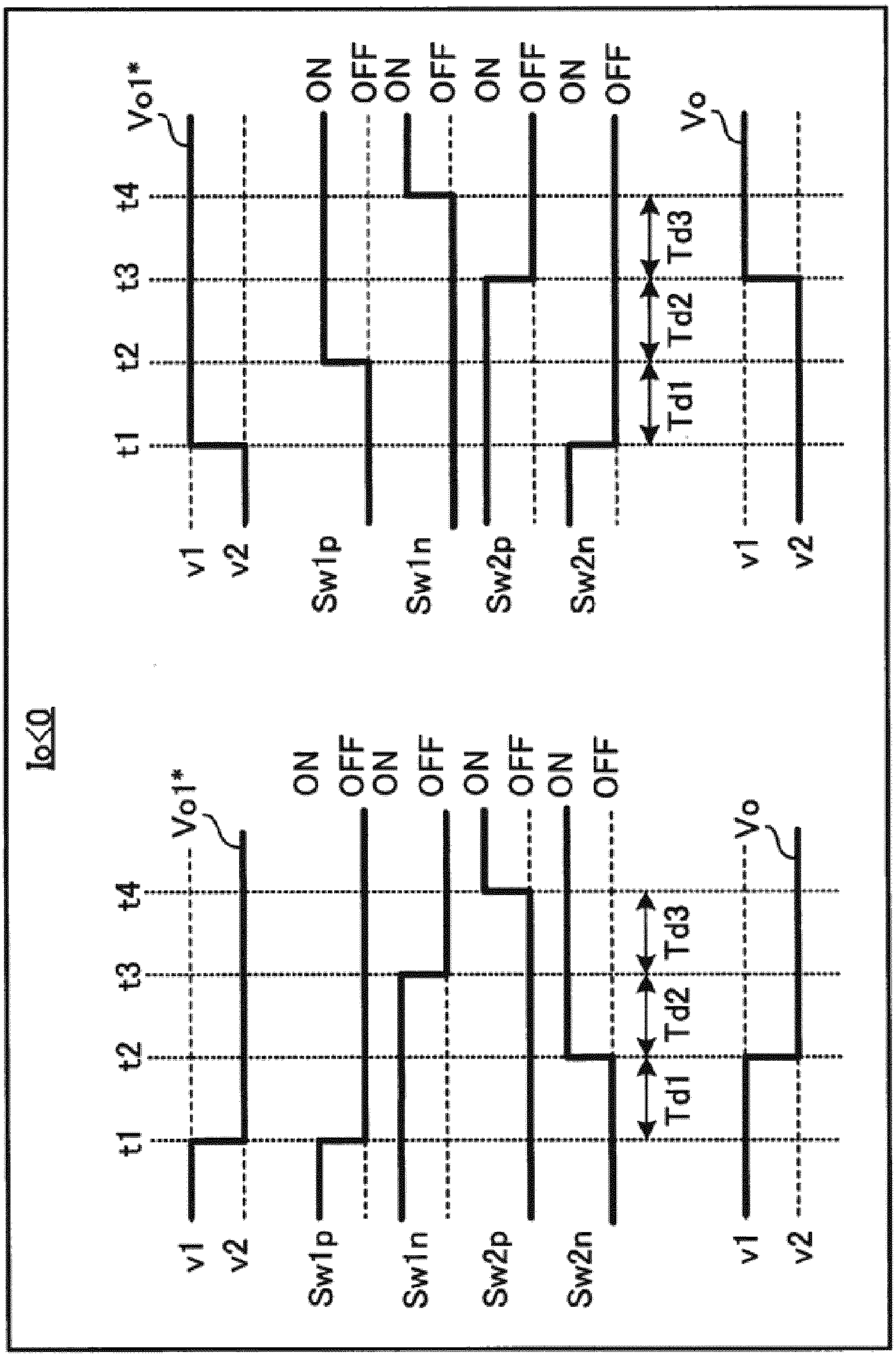
Io<0
t1
t2
t3
t4
Vo1*
v1
v2
Sw1p
Sw1n
Sw2p
Sw2n
ON
OFF
Td1
Td2
Td3
Vo

FIG. 7

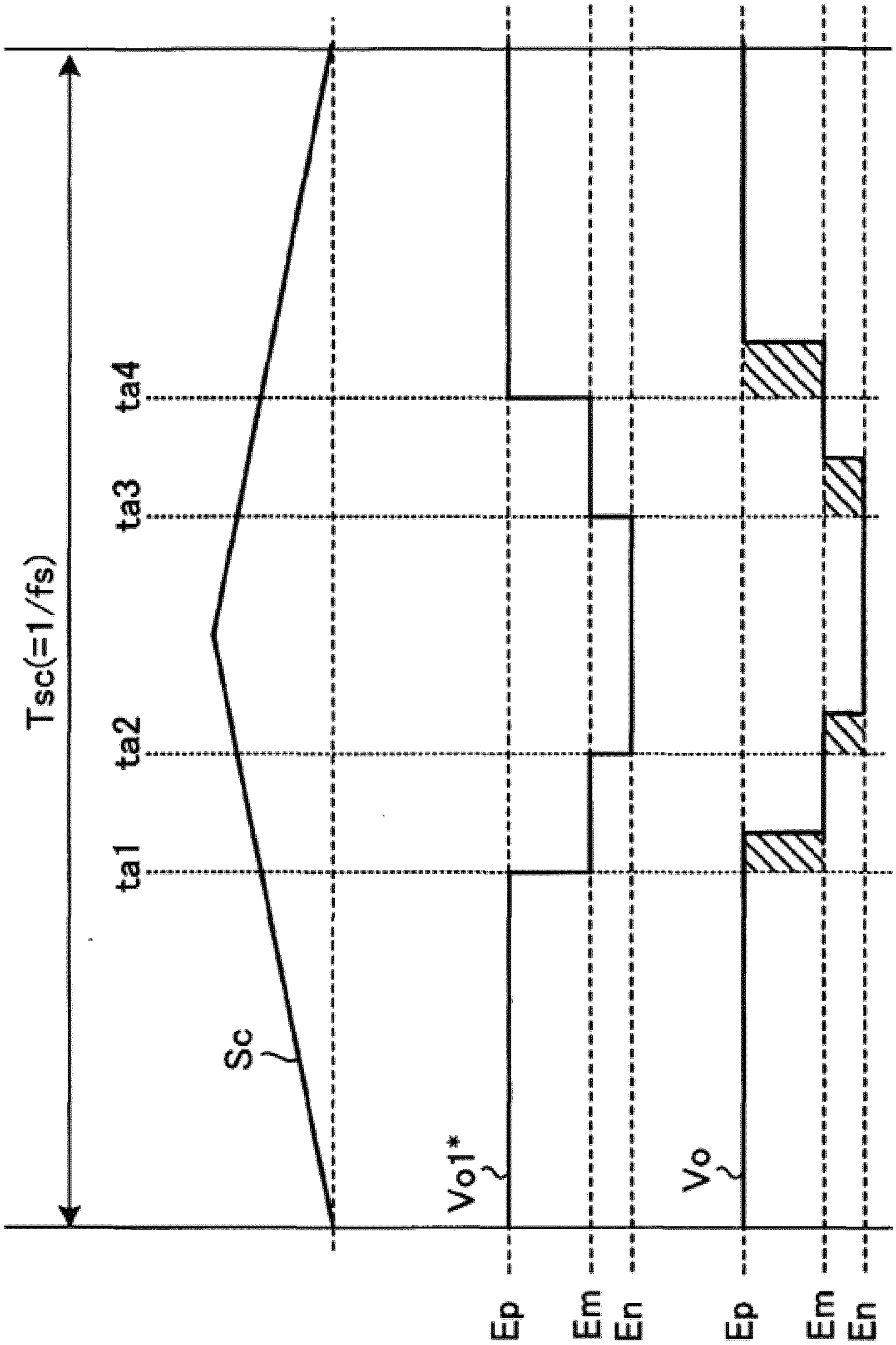

# FIG. 8

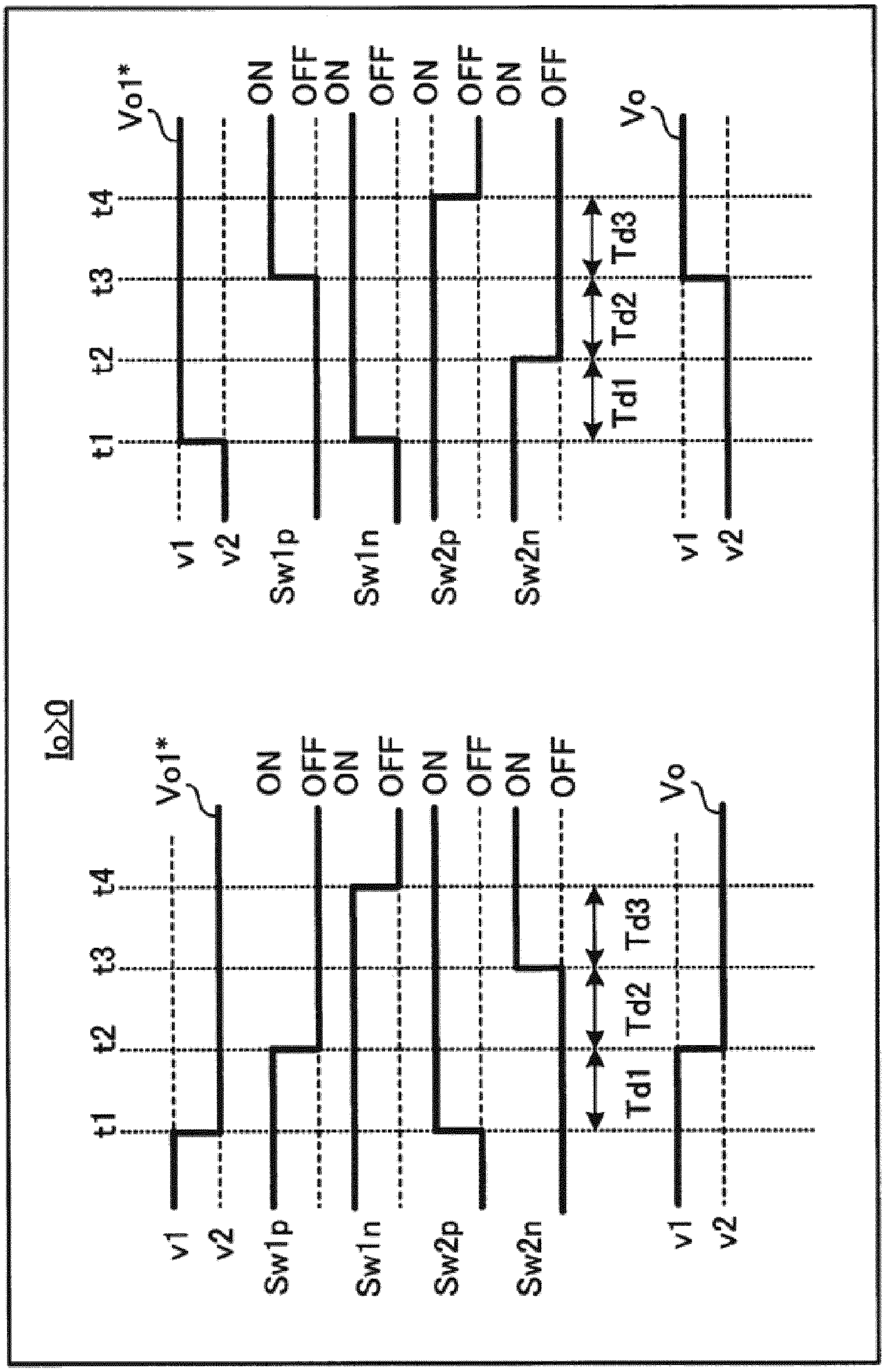
Io>0
t1
t2
t3
t4
Vo1*
v1
v2
Sw1p
Sw1n
Sw2p
Sw2n
ON
OFF
Td1
Td2
Td3
Vo

FIG. 9

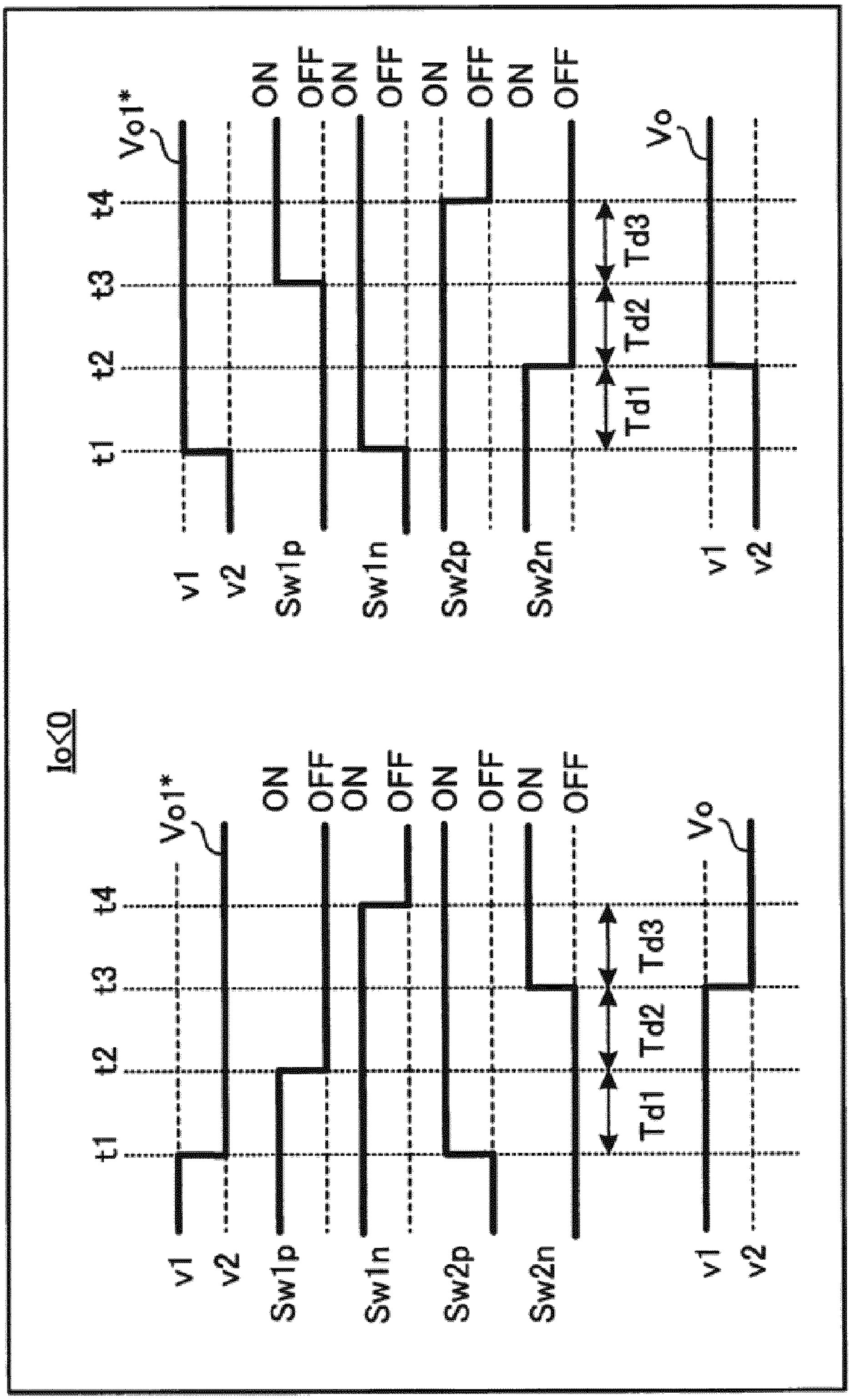
Io<0
t1
t2
t3
t4
Vo1*
v1
v2
Sw1p
Sw1n
Sw2p
Sw2n
ON
OFF
Td1
Td2
Td3
Vo

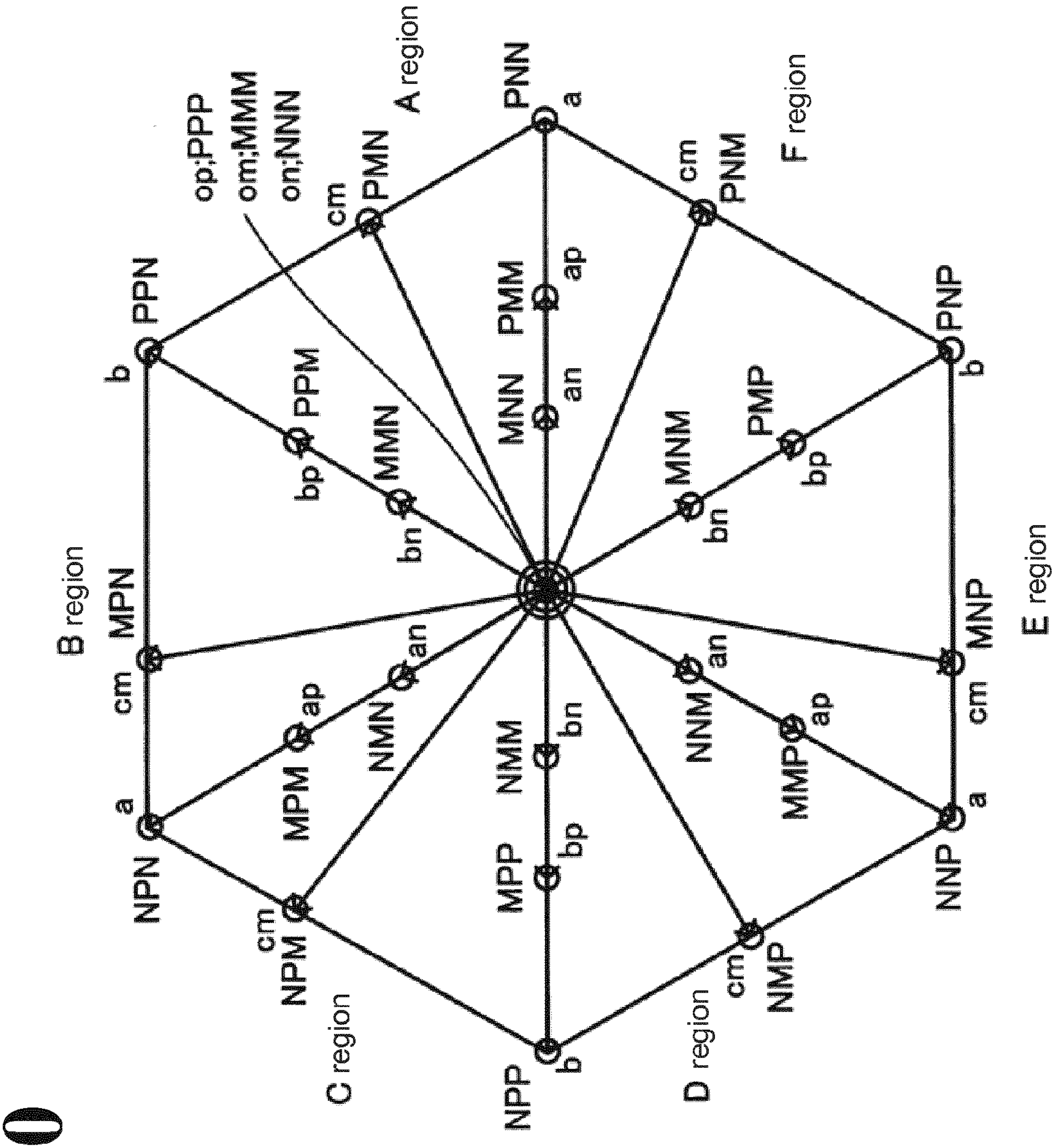
A region
B region
C region
D region
E region
F region
op;PPP
om;MMM
on;NNN
PNN
PPN
NPN
NPP
NNP
PNP
PMN
MPN
NPM
NMP
MNP
PNM
PMM
MNN
PPM
MMN
MNM
PMP
MPM
NMN
NMM
MPP
NNM
MMP
a
b
cm
ap
an
bp
bn

# FIG. 10

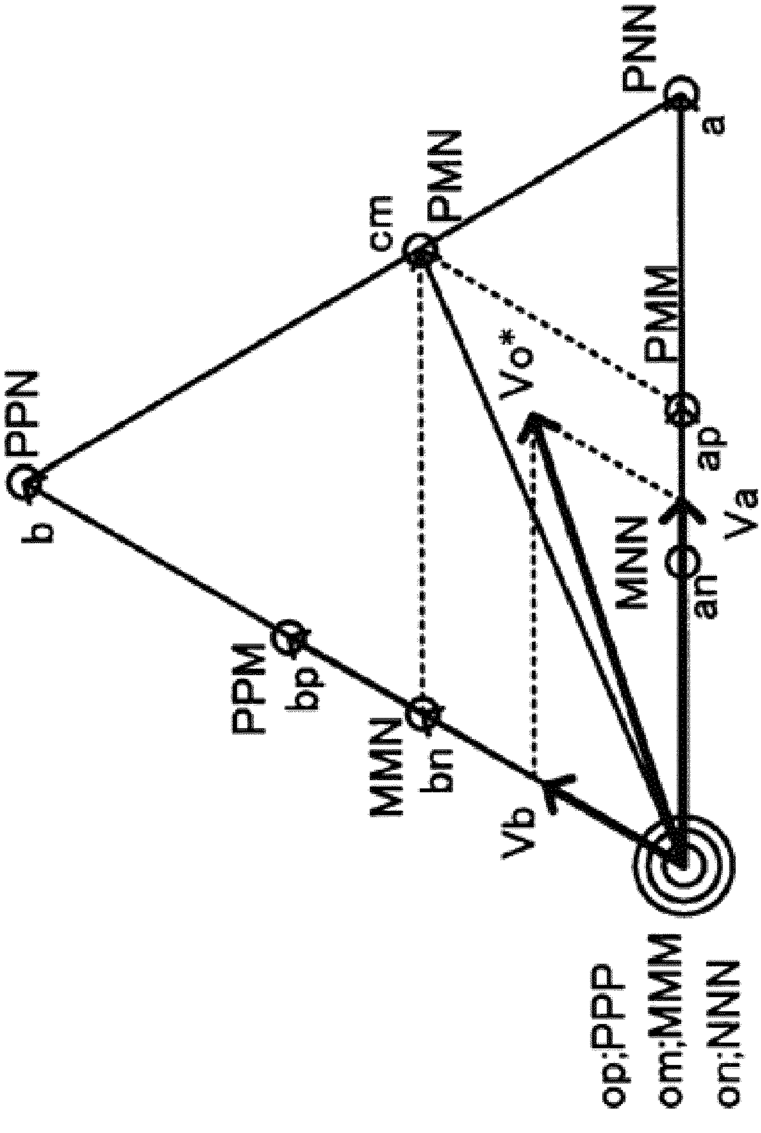
PNN
a
cm
PMN
PMM
Vo*
PPN
b
ap
Va
MNN
an
PPM
bp
MMN
bn
Vb
op;PPP
om;MMM
on;NNN

FIG. 11

FIG. 12

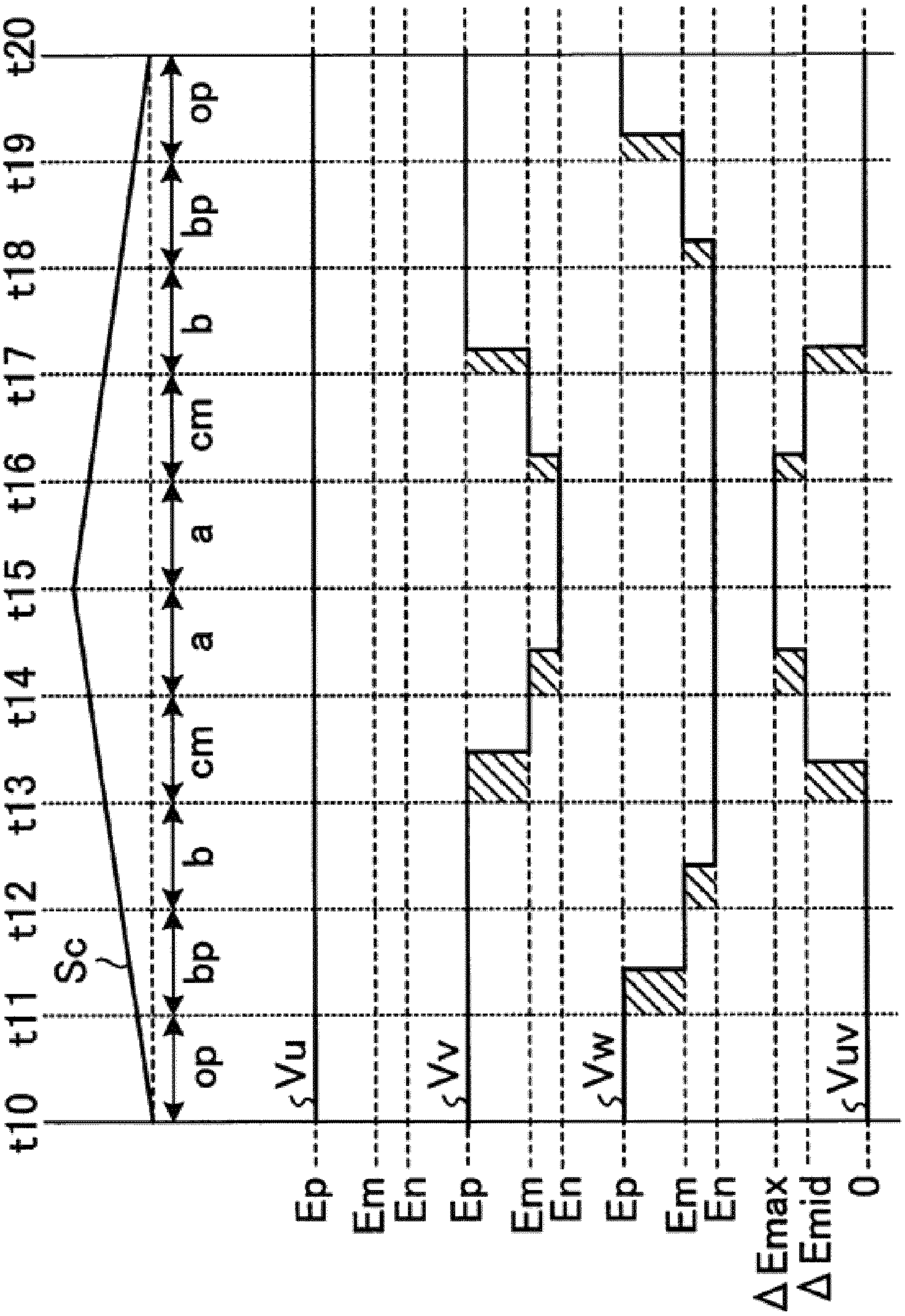

t10
t11
t12
t13
t14
t15
t16
t17
t18
t19
t20
Sc
op
bp
b
cm
a
a
cm
b
bp
op
Vu
Vv
Vw
Vuv
Ep
Em
En
Ep
Em
En
Ep
Em
En
ΔEmax
ΔEmid
0

FIG. 13

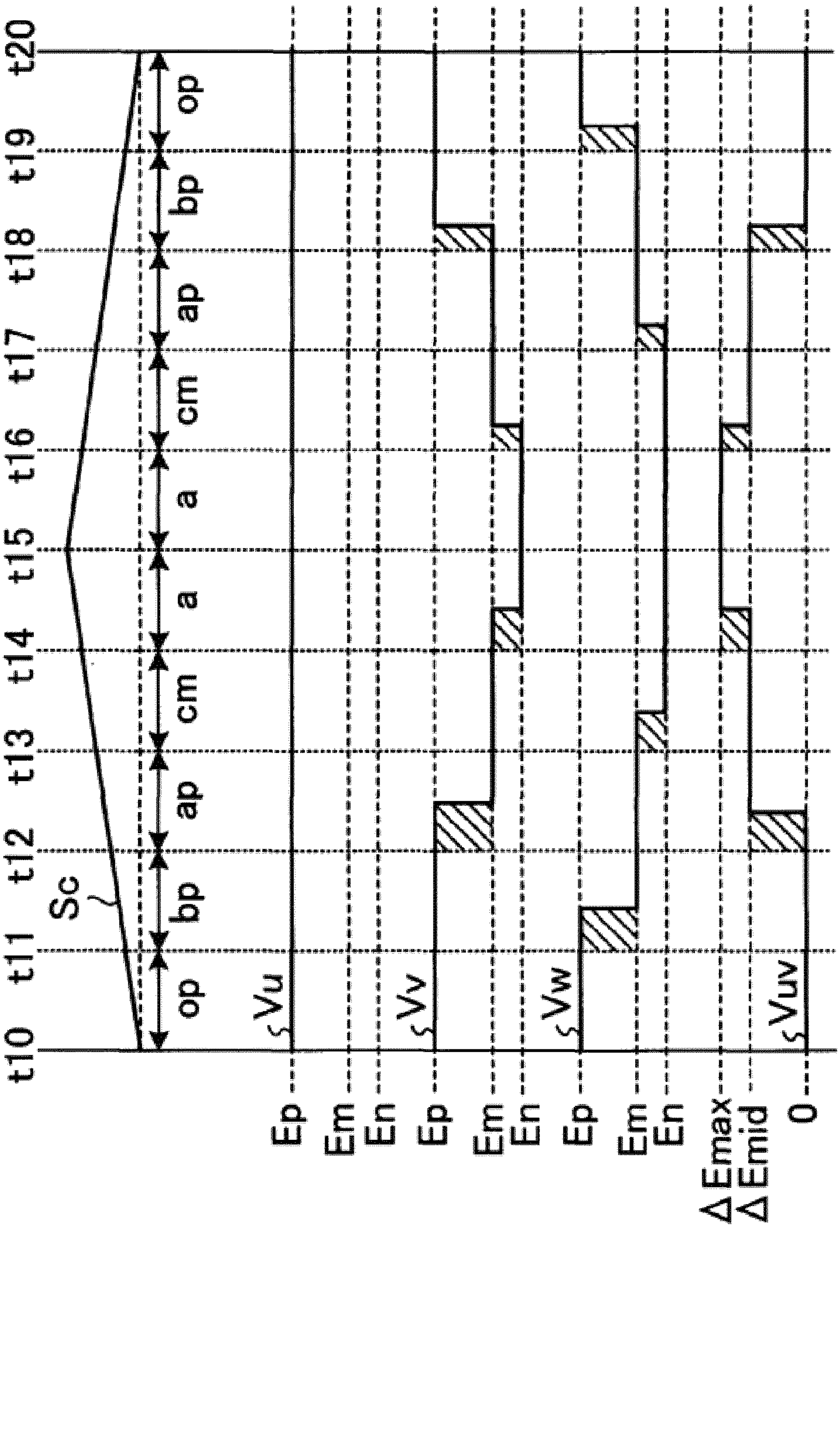
t10
t11
t12
t13
t14
t15
t16
t17
t18
t19
t20
Sc
op
bp
ap
cm
a
a
cm
ap
bp
op
Vu
Vv
Vw
Vuv
Ep
Em
En
Ep
Em
En
Ep
Em
En
ΔEmax
ΔEmid
0

FIG. 14

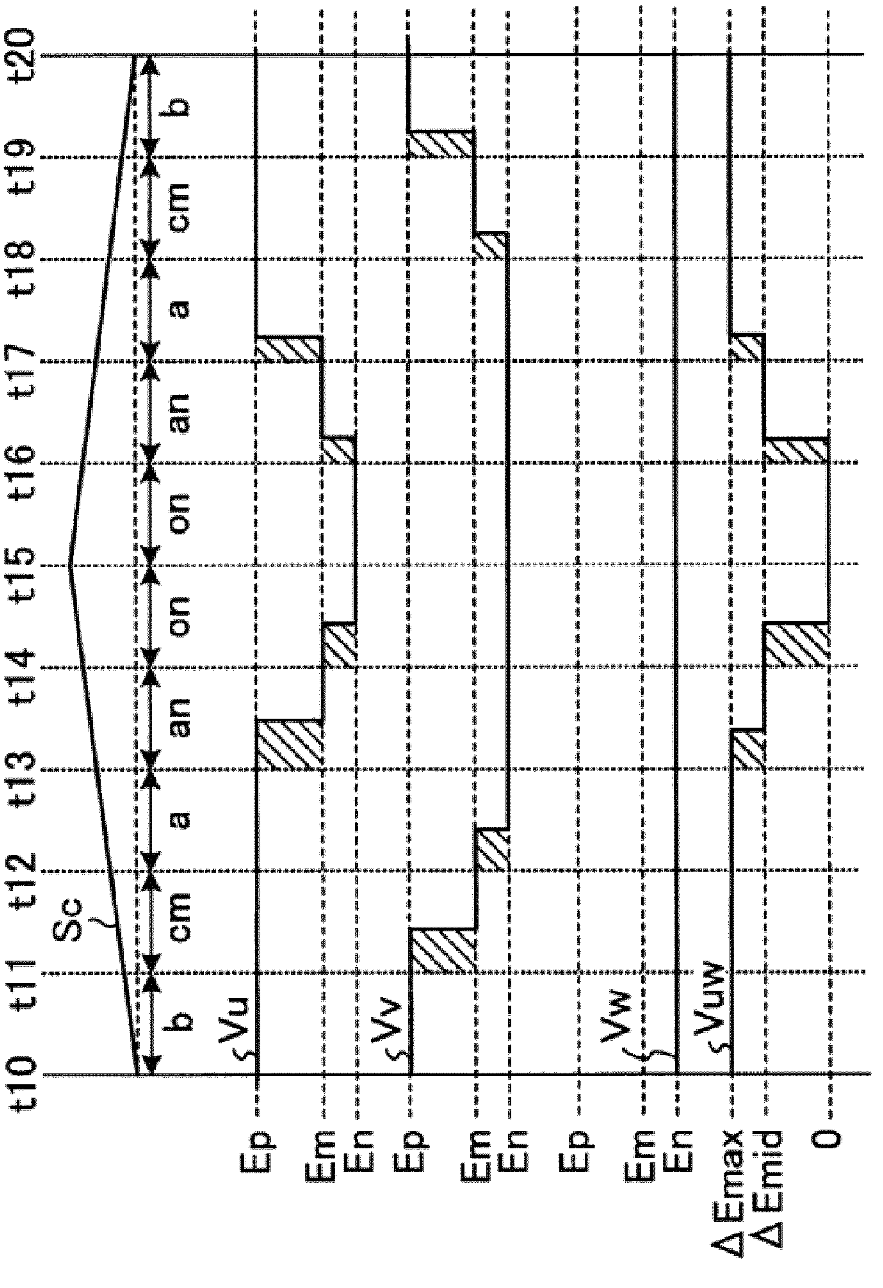
t10
t11
t12
t13
t14
t15
t16
t17
t18
t19
t20
Sc
b
cm
a
an
on
on
an
a
cm
b
Vu
Vv
Vw
Vuw
Ep
Em
En
Ep
Em
En
Ep
Em
En
ΔEmax
ΔEmid
0

FIG. 15

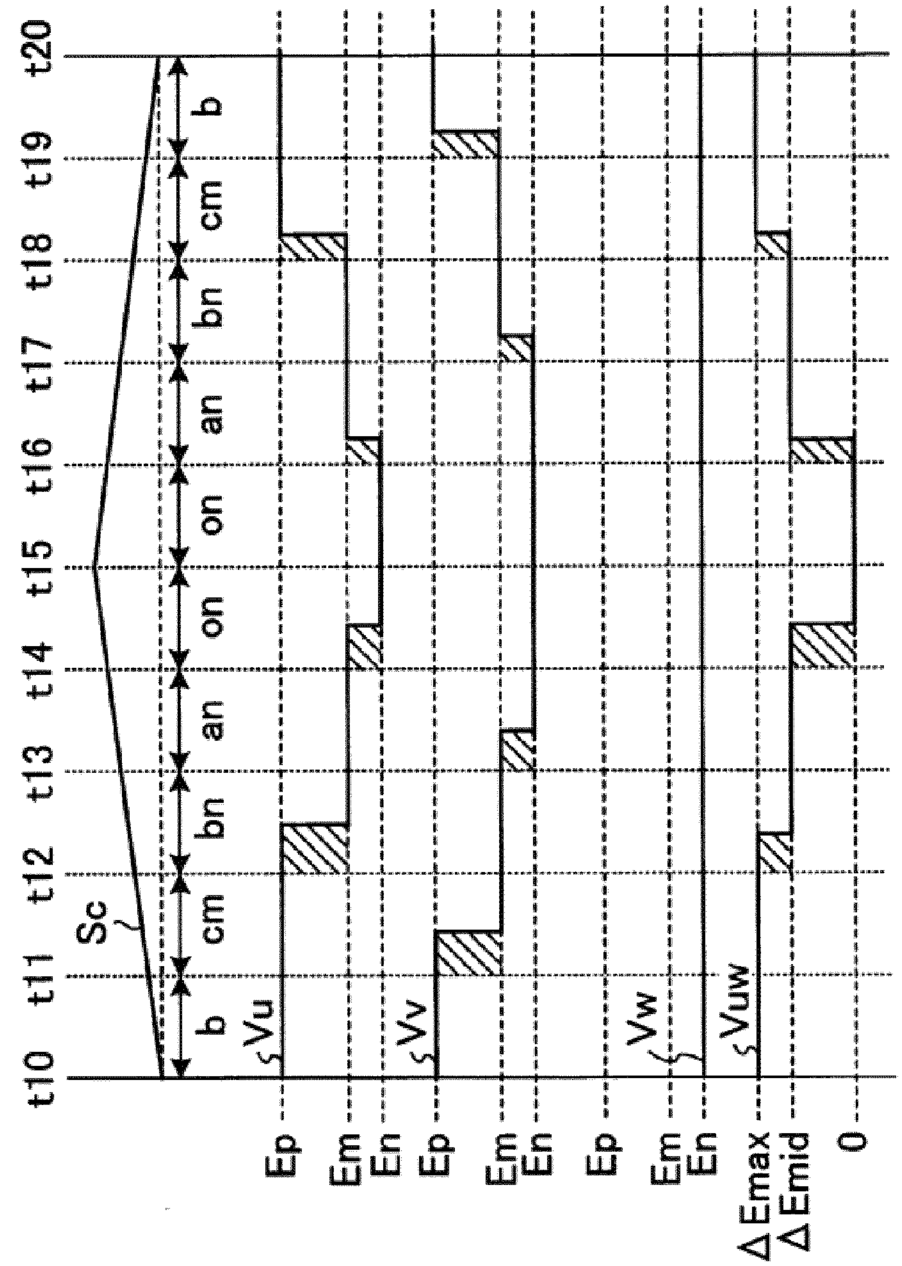

t10
t11
t12
t13
t14
t15
t16
t17
t18
t19
t20
Sc
b
cm
bn
an
on
on
an
bn
cm
b
Vu
Vv
Vw
Vuw
Ep
Em
En
Ep
Em
En
Ep
Em
En
Δ Emax
Δ Emid
0

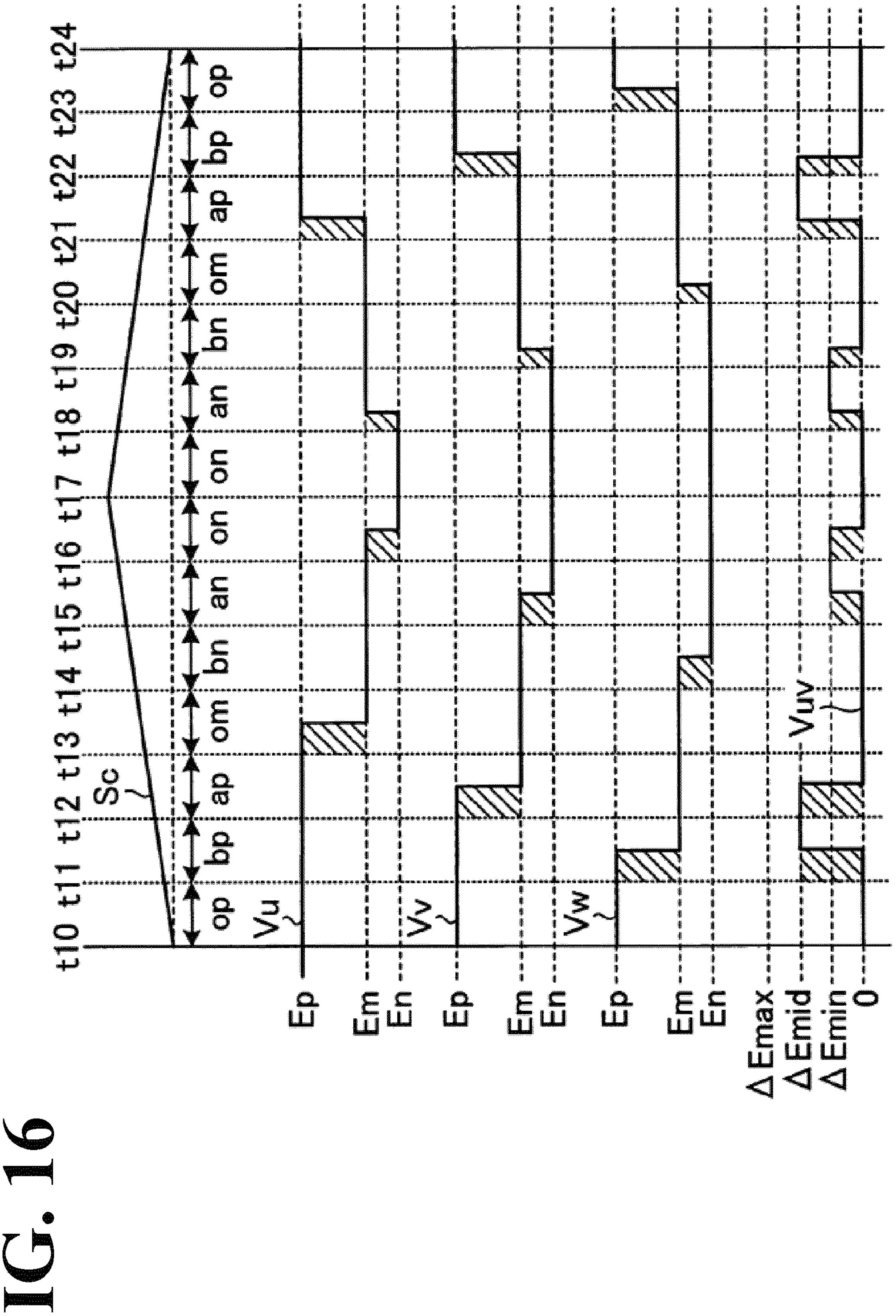

t10 t11 t12 t13 t14 t15 t16 t17 t18 t19 t20 t21 t22 t23 t24
Sc
op bp ap om bn an on on an bn om ap bp op
Vu
Vv
Vw
Vuv
Ep
Em
En
Ep
Em
En
Ep
Em
En
Δ Emax
Δ Emid
Δ Emin
0


FIG. 16

FIG. 17

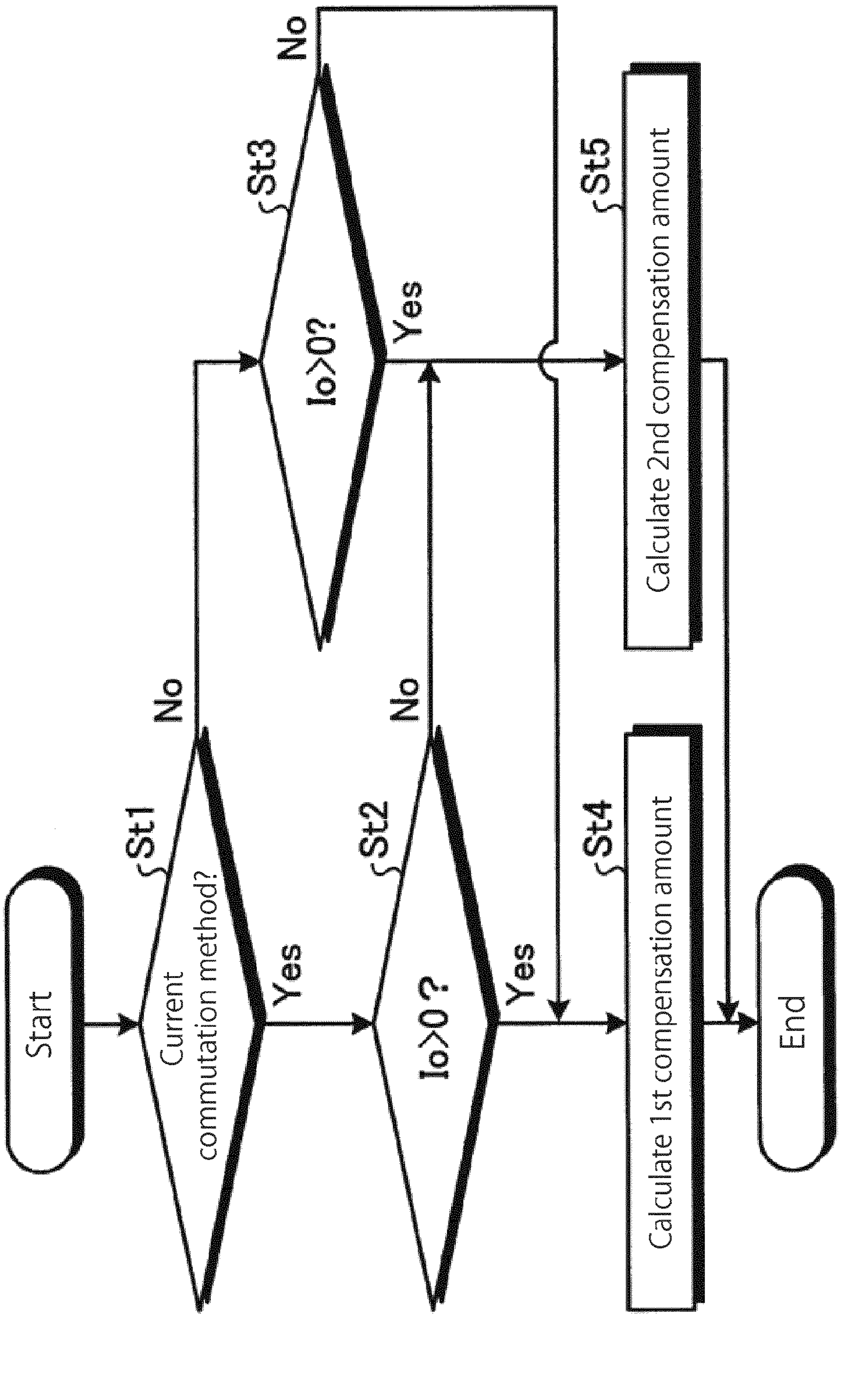
Start
St1
Current commutation method?
Yes
No
St2
Io>0 ?
Yes
No
St3
Io>0?
Yes
No
St4
Calculate 1st compensation amount
St5
Calculate 2nd compensation amount
End

FIG. 18

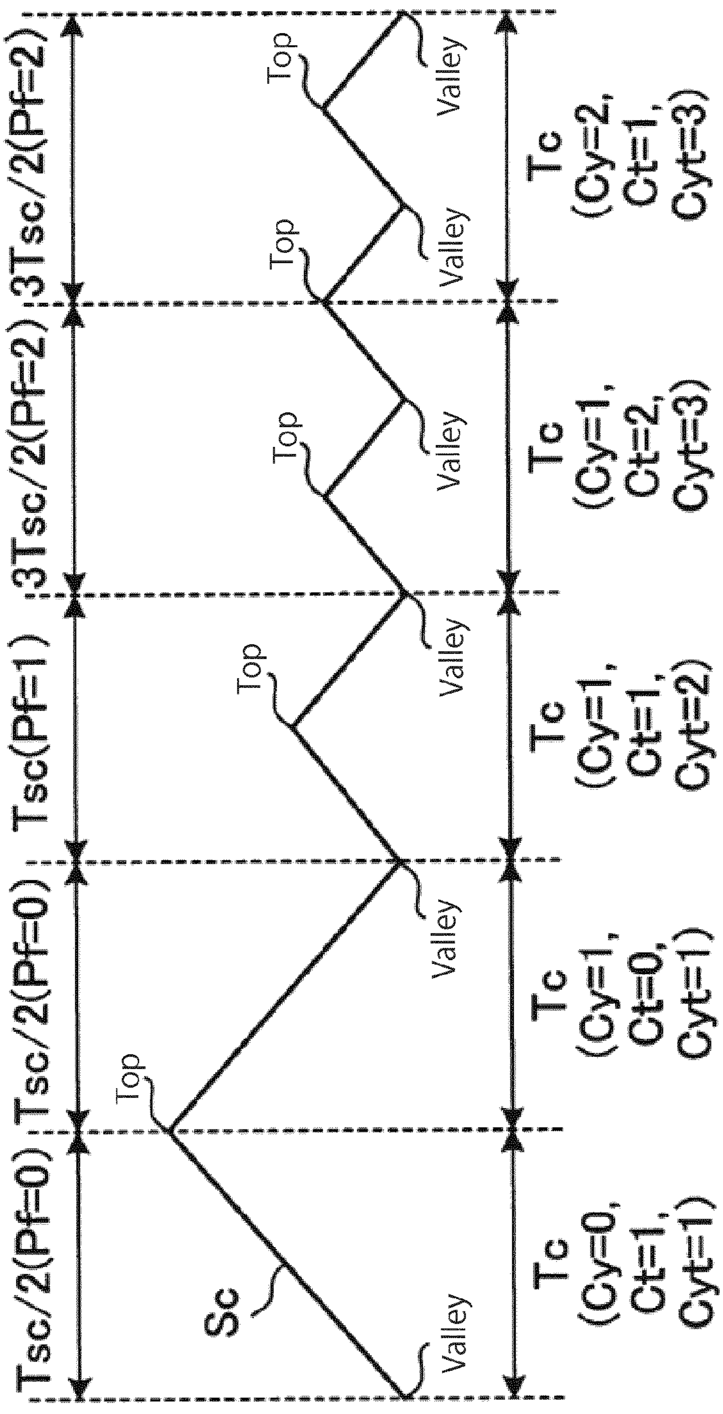
Tsc/2(Pf=0)
Tsc/2(Pf=0)
Tsc(Pf=1)
3Tsc/2(Pf=2)
3Tsc/2(Pf=2)
Sc
Top
Valley
Tc
(Cy=0,
Ct=1,
Cyt=1)
Tc
(Cy=1,
Ct=0,
Cyt=1)
Tc
(Cy=1,
Ct=1,
Cyt=2)
Tc
(Cy=1,
Ct=2,
Cyt=3)
Tc
(Cy=2,
Ct=1,
Cyt=3)

FIG. 19

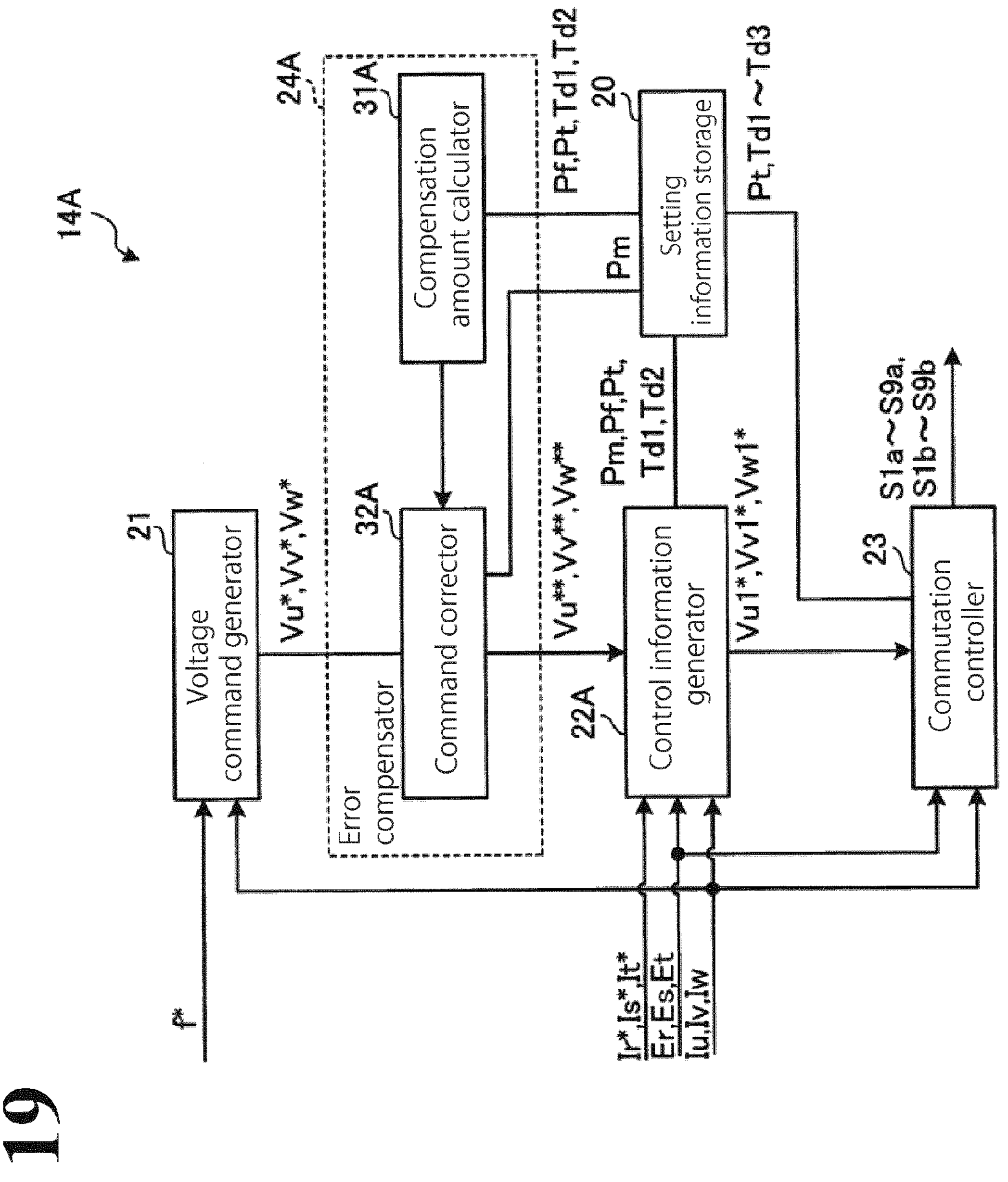
14A
21
Voltage command generator
f*
Vu*,Vv*,Vw*
24A
31A
Compensation amount calculator
32A
Command corrector
Error compensator
Pf,Pt,Td1,Td2
Pm
20
Setting information storage
Vu**,Vv**,Vw**
Pm,Pf,Pt,
Td1,Td2
22A
Control information generator
Pt,Td1~Td3
Vu1*,Vv1*,Vw1*
23
Commutation controller
S1a~S9a,
S1b~S9b
Ir*,Is*,It*
Er,Es,Et
Iu,Iv,Iw

Europäisches Patentamt
European Patent Office
Office européen des brevets

# EUROPEAN SEARCH REPORT

Application Number
EP 14 19 2793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 048535 A (UNIV NAGAOKA TECHNOLOGY; FUJI ELECTRIC HOLDINGS) 28 February 2008 (2008-02-28) * paragraph [0023] * * paragraph [0029] - paragraph [0058] * * figures 1,2,5,7 * ----- | 1-8 | INV. H02M5/297 ADD. H02M1/38 H02M5/293 H02M1/00 |
| X | GB 2 458 726 A (YASKAWA DENKI SEISAKUSHO KK [JP]) 7 October 2009 (2009-10-07) * paragraph [0002] - paragraph [0004] * * paragraph [0026] - paragraph [0028] * * figure 1 * ----- | 1-8 | |
| X | JP 2007 209109 A (FUJI ELEC FA COMPONENTS & SYS) 16 August 2007 (2007-08-16) * paragraph [0003] - paragraph [0004] * * paragraph [0018] - paragraph [0025] * * figures 1,3,4 * ----- | 1-8 | |
| A | BLAABJERG F ET AL: "A Nonlinearity Compensation Method for a Matrix Converter Drive", IEEE POWER ELECTRONICS LETTERS, IEEE SERVICE CENTER, NEW YORK, NY, US, vol. 3, no. 1, March 2005 (2005-03), pages 19-23, XP011128777, ISSN: 1540-7985, DOI: 10.1109/LPEL.2004.842361 * the whole document * ----- | 1-8 | TECHNICAL FIELDS SEARCHED (IPC) H02M |

The present search report has been drawn up for all claims

1

| Place of search | Date of completion of the search | Examiner |
|---|---|---|
| The Hague | 16 April 2015 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 19 2793

This annex lists the patent family members relating to the patent documents cited in the above-mentioned European search report. The members are as contained in the European Patent Office EDP file on
The European Patent Office is in no way liable for these particulars which are merely given for the purpose of information.

16-04-2015

| Patent document cited in search report | Publication date | Patent family member(s) | Publication date |
|---|---|---|---|
| JP 2008048535 A | 28-02-2008 | JP 4884131 B2 | 29-02-2012 |
| | | JP 2008048535 A | 28-02-2008 |
| GB 2458726 A | 07-10-2009 | NONE | |
| JP 2007209109 A | 16-08-2007 | JP 4876600 B2 | 15-02-2012 |
| | | JP 2007209109 A | 16-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004007929 A
- JP 2007082286 A